# EUROPÄISCHE PATENTSCHRIFT

(11) **EP 0 714 955 B1**
(45) Veröffentlichungstag und Bekanntmachung des Hinweises auf die Patenterteilung: **19.07.2000**
(21) Anmeldenummer: 95810732.8
(22) Anmeldetag: 23.11.1995
(51) Int. Cl.: C09B 62/09

(54) **Azofarbstoffe, Verfahren zu deren Herstellung und deren Verwendung**
Azodyestuffs, process for their preparation and the use thereof
Colorants azoiques, procédé pour leur préparation et leur utilisation

(30) Priorität: 02.12.1994 CH 365194
(43) Veröffentlichungstag der Anmeldung: 05.06.1996
(73) Patentinhaber: Ciba Specialty Chemicals Holding Inc., 4057 Basel (CH)
(72) Erfinder: Hurter, Rudolf, CH-4058 Basel (CH)

(56) Entgegenhaltungen:
- EP-A- 0 357 560
- DE-A- 1 544 425
- GB-A- 2 036 780
- US-A- 3 040 021
- CHEMICAL ABSTRACTS, vol. 108, no. 18, Mai 1988 Columbus, Ohio, US; abstract no. 152086u, K. HIMENO ET. AL. 'disazocompounds for dyeing cellulosic fibers' Seite 80; Spalte 1; & JP-A-62 250 059 (MITSUBISHI CHEMICAL INDUSTRIES)
- CHEMICAL ABSTRACTS, vol. 106, no. 4, Januar 1987 Columbus, Ohio, US; abstract no. 19974z, T. HIBARA ET. AL. 'Disazo dyes' Seite 69; Spalte 1; & JP-A-61 190 561 (MITSUBISHI CHEMICAK INDUSTRIES)

## Beschreibung

Die vorliegende Erfindung betrifft neue Azofarbstoffe, Verfahren zu deren Herstellung und Verwendung dieser Farbstoffe zum Färben und Bedrucken von Fasermaterialien, insbesondere textilen Fasermaterialien.

Sulfonierte Azofarbstoffe sind bekannt, so offenbart die JP-A-62 250 059 symmetrische Disazo-Reaktivfarbstoffe, welche vier bis sechs Sulfogruppen aufweisen.

Gegenstand der vorliegenden Erfindung sind Azofarbstoffe der Formel 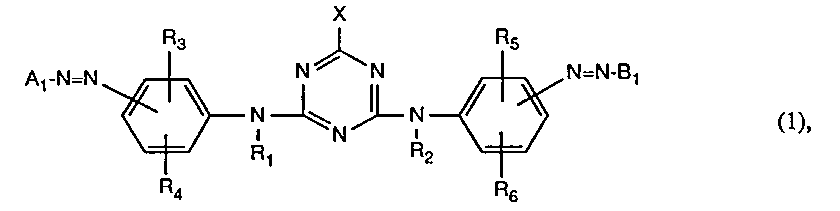 worin
R₁ und R₂ unabhängig voneinander Wasserstoff oder C₁-C₄-Alkyl,
R₃, R₄, R₅ und R₆ unabhängig voneinander Wasserstoff, C₁-C₄-Alkyl, C₁-C₄-Alkoxy,
C₂-C₄-Alkanoylamino, Ureido oder Halogen sind,
X Chlor oder Fluor,
B₁ ein Rest der Benzolreihe, der Naphthalinreihe oder der heterocyclischen Reihe ist, und
A₁ ein Rest der Formel 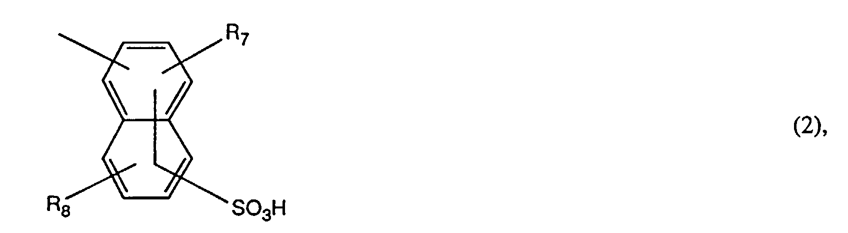 worin
   R₇ Wasserstoff, Amino, N-Mono- oder N,N-Di-C₁-C₄-Alkylamino oder gegebenenfalls substituiertes Phenylamino ist und
   R₈ Wasserstoff oder Hydroxyl ist,
oder A₁ ein Rest der Formel 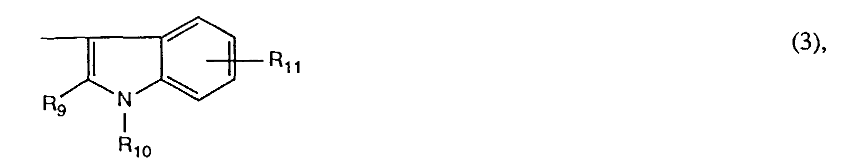 worin
R₉ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₁₀ Wasserstoff oder C₁-C₈-Alkyl und
R₁₁ Wasserstoff, C₁-C₄-Alkyl, C₁-C₄-Alkoxy, C₁-C₄-Alkanoylamino, Ureido, Halogen oder Sulfo bedeutet, ist, und
die Azofarbstoffe der Formel (1) wenigstens eine und höchstens zwei Sulfogruppen enthalten,
mit der Massgabe, dass der Rest der Formel (2) nicht 6-Sulfonaphth-2-yl bedeutet.

Als C₁-C₄-Alkyl kommen für R₁, R₂, R₃, R₄, R₅, R₆ und R₁₁ Methyl, Aethyl, Propyl, Isopropyl, Butyl, Isobutyl, sek.-Butyl oder tert.-Butyl, insbesondere Methyl oder Äthyl, in Betracht.

Als C₁-C₈-Alkyl kommen für R₉ und R₁₀ z.B. Methyl, Aethyl, Propyl, Isopropyl, Butyl, Isobutyl, sek.-Butyl, tert.-Butyl oder geradkettiges oder verzweigtes Pentyl, Hexyl, Heptyl oder Oktyl in Betracht. Bevorzugt sind hierbei R₉ und R₁₀ C₁-C₄-Alkyl, insbesondere Methyl oder Äthyl.

Als C₁-C₄-Alkoxy kommen für R₃, R₄, R₅, R₆ und R₁₁ beispielsweise Methoxy, Aethoxy, Propoxy, Isopropoxy, Butoxy, sek.-Butoxy, Isobutoxy oder tert.-Butoxy, insbesondere Methoxy oder Äthoxy, in Betracht.

Als C₂-C₄-Alkanoylamino kommen für R₃, R₄, R₅, R₆ und R₁₁ beispielsweise Acetylamino, Propionylamino oder Butyrylamino, insbesondere Acetylamino, in Betracht.

Als Halogen kommen für R₃, R₄, R₅, R₆ und R₁₁ beispielsweise Fluor oder Brom und insbesondere Chlor in Betracht.

Als N-Mono- oder N,N-Di-C₁-C₄-Alkylamino kommen für R₇ z.B. solche mit Methyl- oder Aethylresten in Betracht. Bevorzugt sind N-Mono-C₁-C₄-Alkylamine, wie z.B. -NHC₂H₅ oder insbesondere -NHCH₃.

Als gegebenenfalls substituiertes Phenylamino kommen für R₇ neben den unsubstituierten Resten z.B. die im Phenylring durch C₁-C₄-Alkyl, C₁-C₄-Alkoxy, C₁-C₄-Alkanoylamino, Ureido, Halogen oder Sulfo substituierten Reste in Betracht Bevorzugt ist gegebenenfalls im Phenylring durch C₁-C₄-Alkyl, C₁-C₄-Alkoxy oder Halogen, insbesondere gegebenenfalls im Phenylring durch C₁-C₄-Alkyl oder C₁-C₄-Alkoxy, substituiertes Phenylamino. Besonders bevorzugt ist der Phenylaminorest unsubstituiert.

Der Rest B₁ ist bevorzugt ein Benzol-, Naphthalin-, 6-Hydroxypyrid-(2)-on-, 1-Phenyl-5-aminopyrazol-, 1-Phenylpyrazol-(5)-on- oder Indolrest. Bevorzugt ist B₁ ein Benzol-, Napthalin-, 1-Phenylpyrazol-(5)-on- oder Indolrest, insbesondere ein Benzol-, Napthalin- oder Indolrest und vorzugsweise ein Napthalin- oder Indolrest. Von besonderem Interesse sind Naphthalinreste.

Als Beispiele für Substituenten des Restes B₁ seien die folgenden genannt: C₁-C₈-Alkyl, insbesondere C₁-C₄-Alkyl, wie Methyl, Aethyl, Propyl, Isopropyl, Butyl, Isobutyl, sek.-Butyl oder tert.-Butyl; gegebenenfalls durch Hydroxyl substituiertes C₁-C₈-Alkoxy, insbesondere C₁-C₄-Alkoxy, wie Methoxy, Aethoxy, Propoxy, Isopropoxy, Butoxy, Isobutoxy, sek.-Butoxy oder tert-Butoxy; C₂-C₅-Alkanoylamino, insbesondere C₂-C₄-Alkanoylamino, wie z.B. Acetylamino oder insbesondere Acetylamino; Halogen, wie z.B. Fluor oder insbesondere Chlor; Hydroxyl; Cyano; Carbamoyl; Carboxyl; Sulfo; Sulfomethyl; Ureido; Phenyl; Phenylamino; Amino; N-Mono- oder N,N-Di-C₁-C₄-Alkylamino, wobei die Alkylreste z.B. durch Hydroxyl oder Phenyl substituiert sein können. Hierbei können die genannten Phenylreste unsubstituiert oder z.B. durch C₁-C₄-Alkyl, C₁-C₄-Alkoxy, C₂-C₄-Alkanoylamino, Ureido, Halogen oder Sulfo substituiert sein.

R₁ und R₂ sind bevorzugt Wasserstoff.

R₃, R₄, R₅ und R₆ sind bevorzugt Wasserstoff, C₁-C₄-Alkyl, C₁-C₄-Alkoxy, Halogen oder Ureido, insbesondere Wasserstoff, C₁-C₄-Alkyl, C₁-C₄-Alkoxy oder Halogen und vorzugsweise Wasserstoff.

X ist bevorzugt Chlor.

R₇ ist bevorzugt Wasserstoff, Amino oder Phenylamino, insbesondere Wasserstoff oder Amino.

Als Reste der Formel (2) sind solche bevorzugt, worin R₇ und R₈ Wasserstoff sind, oder insbesondere solche, worin R₇ Amino und R₈ Hydroxyl ist.

Vorzugsweise ist der Rest der Formel (2) in 1-Stellung an die Azobrücke gebunden.

R₉ ist bevorzugt Wasserstoff oder insbesondere unsubstituiertes oder durch C₁-C₄-Alkyl, C₁-C₄-Alkoxy oder Halogen substituiertes Phenyl. Besonders bevorzugt ist R₉ Phenyl.

R₁₀ ist bevorzugt Wasserstoff oder C₁-C₄-Alkyl, insbesondere Wasserstoff.

R₁₁ ist bevorzugt Sulfo.

Als Reste der Formel (3) sind solche bevorzugt, worin R₉ unsubstituiertes oder durch C₁-C₄-Alkyl, C₁-C₄-Alkoxy oder Halogen substituiertes Phenyl, insbesondere unsubstituiertes Phenyl, ist, R₁₀ Wasserstoff und R₁₁ Sulfo ist.

B₁ ist bevorzugt ein Rest der Formel 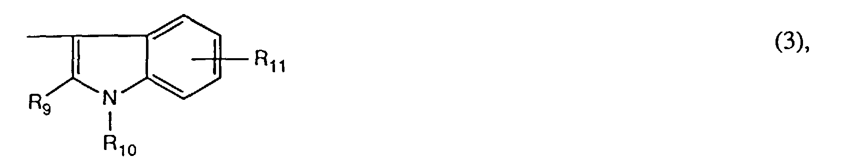 worin
R₉ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₁₀ Wasserstoff oder C₁-C₈-Alkyl und
R₁₁ Wasserstoff, C₁-C₄-Alkyl, C₁-C₄-Alkoxy, C₂-C₄-Alkanoylamino, Ureido, Halogen oder Sulfo bedeutet;
oder ein Rest der Formel 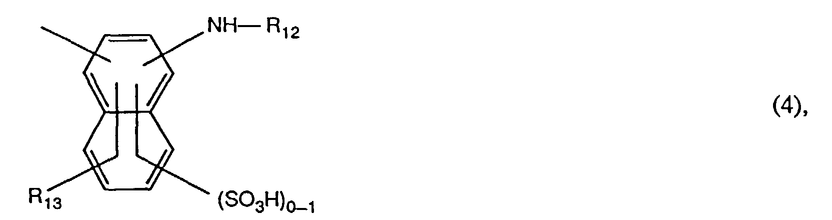 worin
R₁₂ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl und
R₁₃ Wasserstoff, C₁-C₄-Alkyl, C₁-C₄-Alkoxy, C₂-C₄-Alkanoylamino, Ureido, Halogen oder Hydroxyl bedeutet;
oder ein Rest der Formel 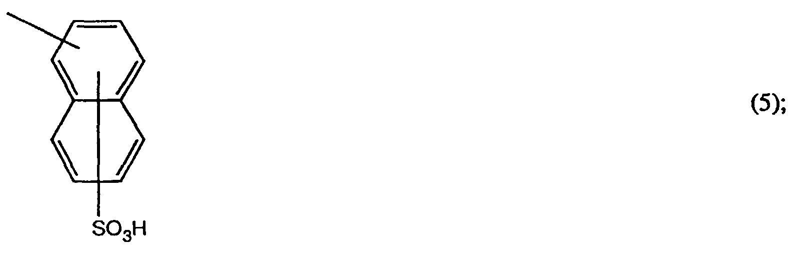 oder ein Rest der Formel 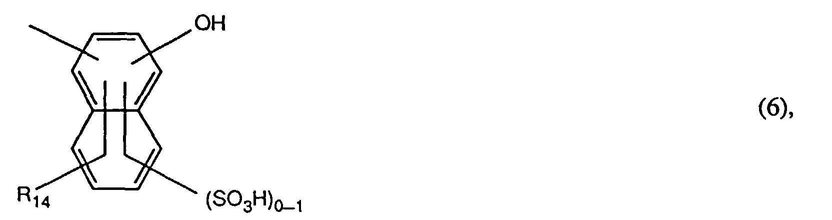 worin R₁₄ Wasserstoff, C₁-C₄-Alkyl, C₁-C₄-Alkoxy, C₂-C₄-Alkanoylamino, Ureido oder Halogen bedeutet;
oder ein Rest der Formel 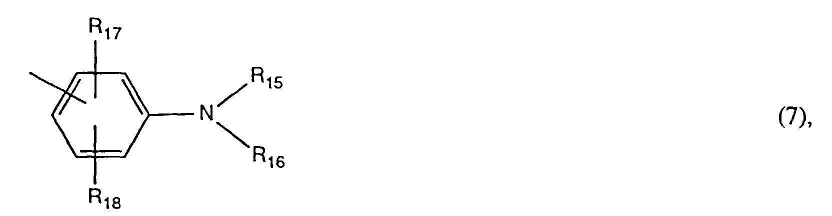 worin
R₁₅ und R₁₆ unabhängig voneinander Wasserstoff oder gegebenenfalls durch Hydroxyl oder Phenyl substituiertes C₁-C₄-Alkyl sind, wobei der Phenylrest unsubstituiert oder durch C₁-C₄-Alkyl, C₁-C₄-Alkoxy, C₂-C₄-Alkanoylamino, Ureido, Halogen oder Sulfo substituiert ist, und
R₁₇ und R₁₈ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 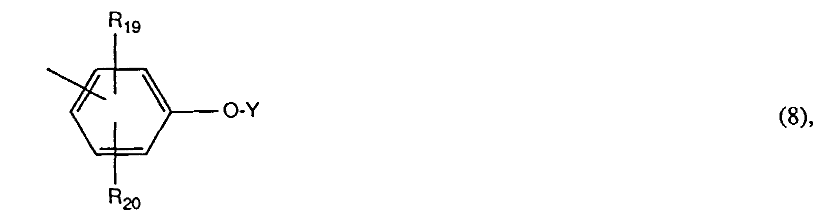 worin
Y Wasserstoff oder gegebenenfalls durch Hydroxyl substituiertes C₁-C₄-Alkyl ist und
R₁₉ und R₂₀ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 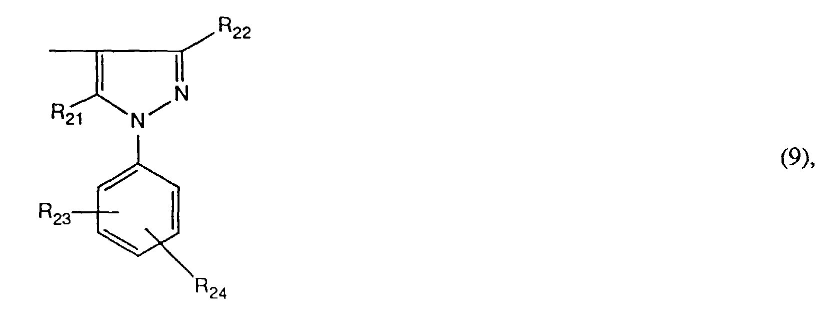 worin
R₂₁ Amino oder Hydroxyl,
R₂₂ Methyl oder Carboxyl und
R₂₃ und R₂₄ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 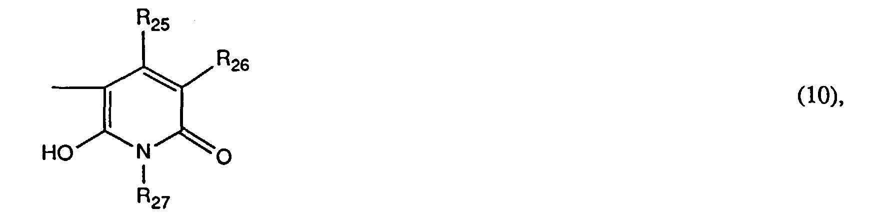 worin
R₂₅ Wasserstoff oder C₁-C₄-Alkyl,
R₂₆ Cyano, Carbamoyl oder Sulfomethyl und
R₂₇ Wasserstoff, C₁-C₄-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl bedeutet.

Für den Rest B₁ der Formel (3) gelten die oben angegebenen Bevorzugungen.

Als Reste B₁ der Formel (4) sind solche bevorzugt, worin R₁₂ Wasserstoff, C₁-C₄-Alkyl oder Phenyl und R₁₃ Wasserstoff oder Hydroxyl bedeutet.

Als Reste B₁ der Formel (6) sind solche bevorzugt, worin R₁₄ Wasserstoff bedeutet. Vorzugsweise enthalten die Reste der Formel (6) eine Sulfogruppe.

Als Reste B₁ der Formel (7) sind solche bevorzugt, worin R₁₅ und R₁₆ unabhängig voneinander Wasserstoff oder gegebenenfalls durch Hydroxyl oder Phenyl substituiertes C₁-C₄-Alkyl sind, wobei der Phenylrest unsubstituiert oder durch Sulfo substituiert ist, und
R₁₇ und R₁₈ unabhängig voneinander Wasserstoff, C₁-C₄-Alkyl oder C₁-C₄-Alkoxy bedeuten.

Als Reste B₁ der Formel (8) sind solche bevorzugt, worin Y Wasserstoff oder C₁-C₄-Alkyl, insbesondere Wasserstoff, ist und R₁₉ und R₂₀ unabhängig voneinander Wasserstoff, C₁-C₄-Alkyl oder C₁-C₄-Alkoxy bedeuten.

Als Reste B₁ der Formel (9) sind solche bevorzugt, worin R₂₁ Hydroxyl, R₂₂ Methyl und R₂₃ und R₂₄ unabhängig voneinander Wasserstoff, C₁-C₄-Alkyl, C₁-C₄-Alkoxy oder Sulfo bedeuten.

Als Reste B₁ der Formel (10) sind solche bevorzugt, worin R₂₅ C₁-C₄-Alkyl, R₂₆ Cyano oder Carbamoyl und R₂₇ C₁-C₄-Alkyl bedeutet.

Besonders bevorzugt ist B₁ ein Rest der Formel (3), (4), (5), (6), (7) oder (8), insbesondere ein Rest der Formel (3), (4) oder (5) und vorzugsweise ein Rest der Formel (3) oder (4). Ganz besonders bevorzugt ist B₁ ein Rest der Formel (4).

Bevorzugt als Azofarbstoffe der Formel (1) sind solche, worin
B₁ ein Rest der Formel (3), (4) oder (5) ist, R₁ und R₂ Wasserstoff, R₃, R₄, R₅ und R₆ unabhängig voneinander Wasserstoff, C₁-C₄-Alkyl, C₁-C₄-Alkoxy oder Halogen sind, R₇ Wasserstoff, Amino oder Phenylamino ist, R₉ unsubstituiertes oder durch C₁-C₄-Alkyl, C₁-C₄-Alkoxy oder Halogen substituiertes Phenyl, R₁₀ Wasserstoff und R₁₁ Sulfo ist.

Von besonderem Interesse sind als Reste B₁ solche der Formeln 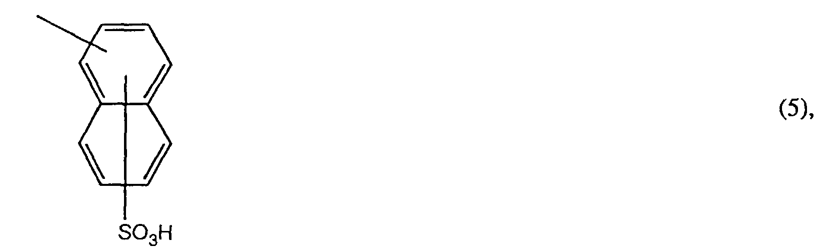 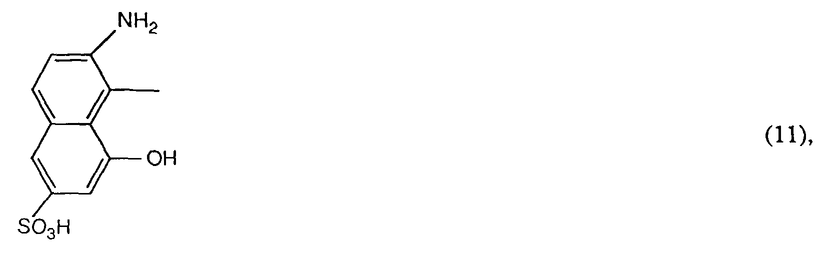 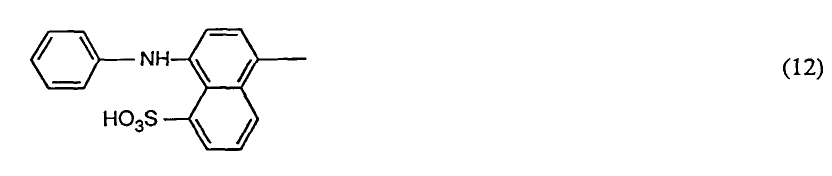 und 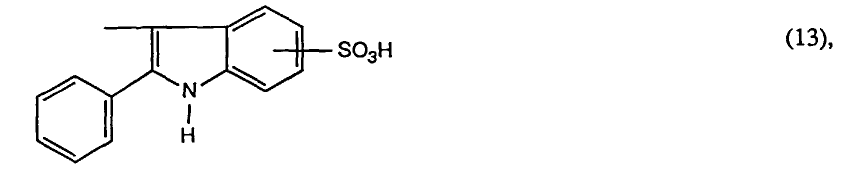 insbesondere solche der Formeln (5), (11) und (13), vorzugsweise solche der Formeln (5) und (11).

Die Reste der Formeln (5), (11), (12) und (13), insbesondere die Reste der Formeln (5), (11) und (13), vorzugsweise die Reste der Formeln (5) und (11) sind weiterhin als Reste A₁ von besonderem Interesse, wobei A₁ in der Bedeutung als Rest der Formel (5) nicht 6-Sulfonaphth-2-yl bedeutet.

Bevorzugt bedeuten A₁ und B₁ unabhängig voneinander einen Rest der Formel (5), (11), (12) oder (13), insbesondere einen Rest der Formel (5), (11) oder (13), vorzugsweise einen Rest der Formel (5) oder (11).

Besonders bevorzugt haben die Reste A₁ und B₁ identische Bedeutungen.

Ganz besonders bevorzugt haben die Reste A₁ und B₁ identische Bedeutungen und sind ein Rest der Formel (5), (11), (12) oder (13), insbesondere ein Rest der Formel (5), (11) oder (13), vorzugsweise ein Rest der Formel (5) oder (11).

Von ganz besonderem Interesse sind Azofarbstoffe der Formel 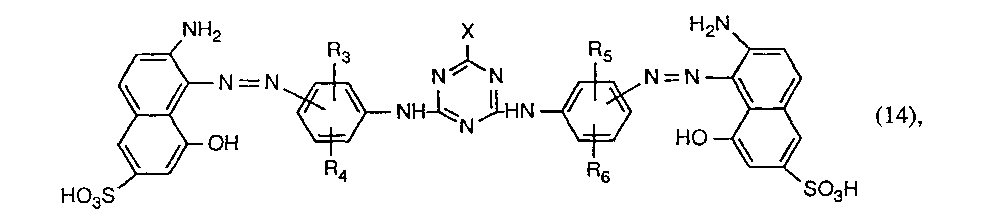 worin R₃, R₄, R₅ und R₆ unabhängig voneinander Wasserstoff, C₁-C₄-Alkyl, C₁-C₄-Alkoxy oder Halogen, insbesondere Wasserstoff sind. X bedeutet hierbei vorzugsweise Chlor.

Gegenstand der vorliegenden Erfindung ist weiterhin ein Verfahren zur Herstellung von Azofarbstoffen der Formel (1), welches dadurch gekennzeichnet ist, dass man Cyanurchlorid oder Cyanurfluorid mit den Aminen der Formeln 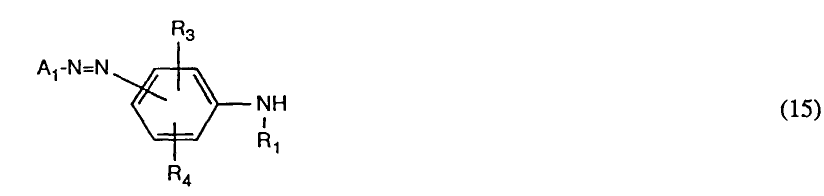 und 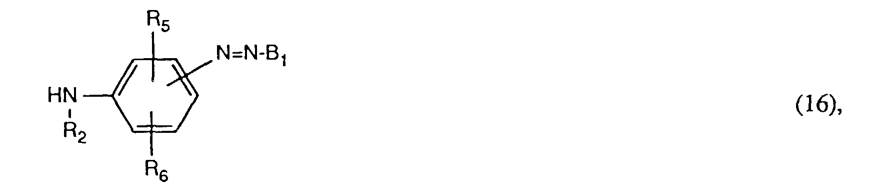 worin R₁, R₂, R₃, R₄, R₅, R₆, A₁ und B₁ die unter Formel (1) angegebenen Bedeutungen haben, kondensiert.

Vorzugsweise setzt man das Cyanurchlorid oder Cyanurfluorid unächst mit in etwa stöchiometrischen Mengen einer der Aminoazoverbindungen der Formeln (15) und (16) bei einer Temperatur von -5 bis 20°C um, wobei der pH-Wert durch Zugabe geeigneter Basen, z.B. Alkalimetallbasen wie Lithium-, Natrium- oder Kaliumhydroxid oder -carbonat, neutral bis leicht sauer, vorzugsweise bei 5 bis 7, gehalten wird. Das erhaltene Triazinderivat kann abgeschieden werden oder es kann das Reaktionsgemisch direkt für eine weitere Reaktion verwendet werden. Zu dem erhaltenen Reaktionsgemisch oder dem zuvor abgeschiedenen Triazinderivat werden zweckmässigerweise in etwa stöchiometrische Mengen der anderen der Aminoazoverbindungen der Formeln (15) und (16) gegeben und diese bei leicht erhöhter Temperatur, vorzugsweise bei 30 bis 50°C und einem neutralen bis leicht sauren pH-Wert, der vorzugsweise 6 bis 7 beträgt, mit dem Triazinderivat zur Reaktion gebracht. Handelt es sich bei den Verbindungen der Formeln (15) und (16) um identische Aminoazoverbindungen, so setzt man ca. 2 Aequivalente dieses Aminoazofarbstoffes mit 1 Aequivalent Cyanurchlorid oder Cyanurfluorid um, wobei die Temperatur vorzugsweise zunächst bei -5 bis 20°C gehalten und dann auf ca. 30 bis 50°C erhöht wird.

Die Verbindungen der Formeln (15) und (16) sind bekannt oder können in Analogie zu bekannten Verbindungen hergestellt werden. So können diese Azoverbindung durch allgemein übliche Diazotierungs- und Kupplungsreaktionen erhalten werden.

Die Diazotierung erfolgt üblicherweise mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung erfolgt üblicherweise bei sauren, neutralen bis schwach alkalischen pH-Werten und Temperaturen von beispielsweise -5 bis 30°C, vorzugsweise 0 bis 25°C.

Die Farbstoffe der Formel (1) liegen entweder in der Form ihrer freien Säure oder vorzugsweise als deren Salze vor.

Als Salze kommen beispielsweise die Alkali- oder Ammmoniumsalze oder die Salze eines organischen Amins in Betracht.

Als Beispiel seien die Natrium-, Lithium-, Kalium- oder Ammoniumsalze oder das Salz des Mono-, Di- oder Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, Papier oder Leder, wie z.B. textilen Fasermaterialien aus Cellulose, Seide und insbesondere Wolle und synthetischen Polyamiden. Die erfindungsgemässen Azofarbstoffe der Formel (1) können in allgemein üblicher, gegebenenfalls zuvor aufbereiteter Form zum Färben oder Bedrucken verwendet werden.

Man erhält egale Färbungen mit guten Allgemeinechtheiten, insbesondere guter Reib-, Nass-, Nassreib- und Lichtechtheit. Ferner weisen die erfindungsgemässen Farbstoffe ein sehr gutes Ausziehvermögen auf. Weiterhin zeigen die erfindungsgemässen Farbstoffe ein sehr gutes Aufbauvermögen und sind sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Herstellungsbeispiel 1: 34,5 Teile p-Nitroanilin werden in üblicher Weise salzsauer mit Natriumnitrit diazotiert.

Die so hergestellte Diazolösung wird bei Raumtemperatur zu einer zweiten Lösung, welche 59,8 Teile 2-Amino-8-naphthol-6-sulfonsäure und 250 Teile Wasser enthält, gegeben. Man lässt während 20 Stunden auskuppeln und stellt dann den pH mittels wässriger Natriumhydroxidlösung (30%) auf einen Wert von 9,5. Man erhält eine Suspension, welche die in Form der freien Säure angegebene Verbindung der Formel 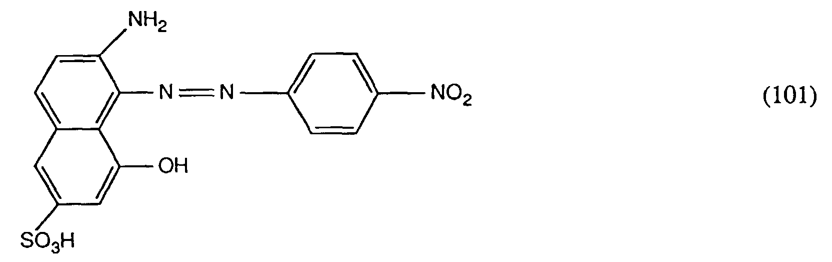 enthält.

1000 Teile der so erhältlichen Suspension werden auf eine Temperatur von 55°C erwärmt und mit 39 Teilen Natriumsulfid versetzt. Die entstehende Lösung wird 15 Minuten bei einer Temperatur von 72 bis 75°C nachgerührt und anschliessend klärfiltriert. Nach Zugabe von 90 Teilen einer wässrigen Natriumhydroxidlösung (30%) wird die entstehende Ausfällung nach einiger Zeit abfiltriert, mit wässriger Natrimchloridlösung (15%) gewaschen und im Vakuum bei einer Temperatur von 50 bis 60°C getrocknet. Man erhält 83 Teile einer Verbindung, welche in Form der freien Säure der Formel 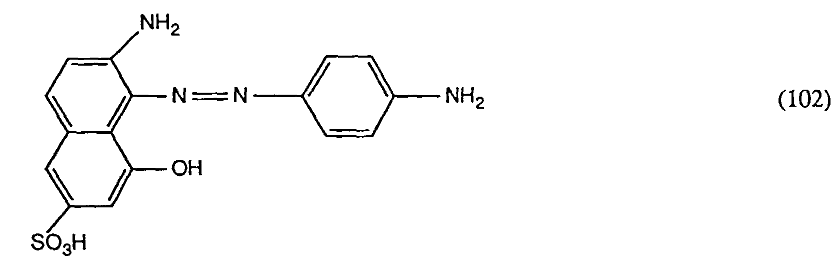 entspricht.

Herstellungsbeispiel 2: 30 Teile 4-Aminoacetanilid werden nach Verrühren in 200 Teilen Wasser und 50 Teilen Salzsäure (32%) bei einer Temperatur von 5 bis 10°C mit 50 Teilen einer 4-normalen Natriumnitritlösung diazotiert. Mit wenig Sulfaminsäure wird überschüssiges Nitrit vernichtet.

Die so hergestellte Diazolösung wird zu einer zweiten Lösung, welche 59,9 Teile Phenyl-Perisäure und 600 Teile Wasser enthält und mit wässriger Natriumhydroxidlösung auf einen pH-Wert von 8 gestellt ist, zulaufen gelassen. Während des Zulaufs der Diazolösung wird der pH durch Zugabe wässriger Natriumhydroxidlösung bei einem Wert von 8 bis 9 gehalten. Anschliessend wird die erhaltene Verbindung durch Zugabe von Natriumchlorid ausgefällt, abfiltriert, mit wässriger Natriumchloridlösung gewaschen und im Vakuum bei einer Temperatur von 50 bis 60°C getrocknet. Man erhält 102 Teile einer Verbindung, welche in Form der freien Säure der Formel 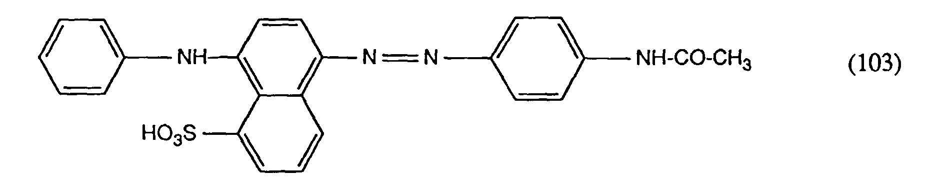 entspricht.

100 Teile der wie oben angegeben erhältlichen Verbindung der Formel (103) werden in 225 Teilen Wasser und 112 Teilen einer wässrigen Natriumhydroxidlösung (30%) siedend verseift. Die erhaltene Masse wird mit Wasser verdünnt, warm filtriert und mit wässriger Natriumchloridlösung (15%) gewaschen. Nach Trocknung im Vakuum bei einer Temperatur von 50 bis 60°C erhält man 75 Teile einer Verbindung, welche in Form der freien Säure der Formel 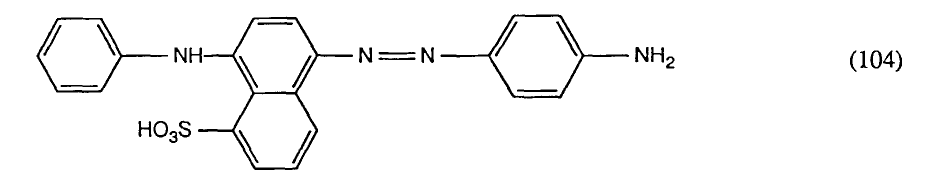 entspricht.

Herstellungsbeispiel 3: 45 Teile 3-Aminoacetanilid werden in 450 Teilen Eiswasser und 75 Teilen Salzsäure (32%) bei einer Temperatur von 0 bis 5°C mit 75 Teilen einer 4-normalen Natriumnitritlösung diazotiert.

Die so hergestellte Diazolösung wird zu einer zweiten Lösung, welche 81,9 Teile 2-Phenylindol-5-sulfonsäure und 450 Teile Wasser enthält, gegeben. Nach ca. 18 Stunden wird das ausgefällte Reaktionsprodukt abfiltriert und mit Wasser gewaschen. Man erhält eine Verbindung, welche in Form der freien Säure der Formel 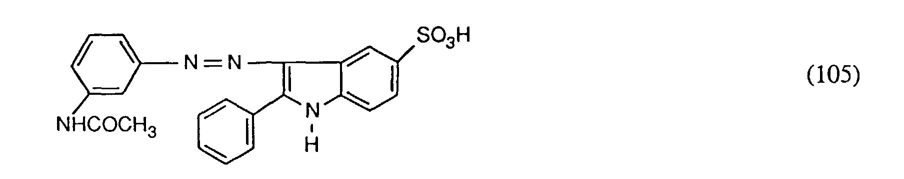 entspricht.

309 Teile der wie oben angegeben erhältlichen Verbindung der Formel (105) werden in 250 Teilen Wasser und 250 Teilen einer wässrigen Natriumhydroxidlösung (30%) siedend verseift. Die Lösung wird mit 150 Teilen Essigsäure (80%) auf einen pH-Wert von 10 gestellt. Anschliessend wird das ausgefällte Produkt abfiltriert und mit wässriger Natriumchloridlösung (2,5%) gewaschen. Nach Trocknung im Vakuum bei einer Temperatur von 50 bis 60°C erhält man 100 Teile einer Verbindung, welche in Form der freien Säure der Formel 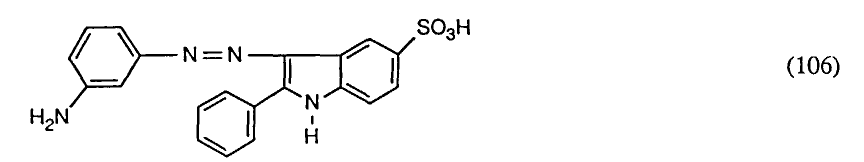 entspricht.

Herstellungsbeispiel 4: 11,14 Teile 1-Naphthylamin-5-sulfonsäure werden in 100 Teilen Wasser bei Raumtemperatur und einem pH-Wert von 7 bis 8 gelöst. Nach der Zugabe von 12,5 Teilen 4-normaler Natriumnitritlösung tropft man die so erhaltene Lösung zu einer Mischung bestehend aus 100 Teilen Eis und 12,5 Teilen Salzsäure (32%). Nach einiger Zeit wird überschüssiges Nitrit mit Sulfaminsäure zerstört.

Zur Herstellung einer zweiten Lösung werden 10,85 Teile 2-Methoxyanilinomethansulfonsäure in 100 Teilen Wasser und einem pH-Wert von 8 gelöst. Nach Beimischung von 6,3 Teilen Natriumhydrogencarbonat lässt man die wie oben angegeben erhältliche Lösung der Diazokomponente zutropfen und hält den pH durch Zugabe von weiteren 1,8 Teilen Natriumhydrogencarbonat bei einem Wert von 6,5 bis 7. Anschliessend wird die erhaltene Verbindung durch Zugabe von Natriumchlorid ausgefällt und abfiltriert. Man erhält 72 Teile einer Verbindung, welche in Form der freien Säure der Formel 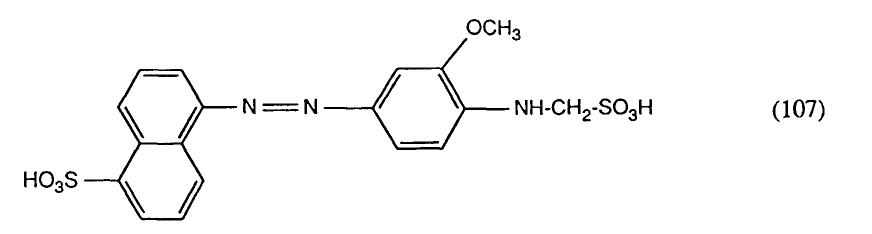 entspricht.

72 Teile der wie oben angegeben erhältlichen Verbindung der Formel (107) werden in 200 Teilen Wasser verrührt und mit 20 Teilen Natriumhydroxid versetzt. Nach der Verseifung bei Siedetemperatur wird mit 45 Teilen Salzsäure (32%) ein pH-Wert von 10 eingestellt, die erhaltene Verbindung bei Raumtemperatur abfiltriert, mit einer wässrigen Natriumchloridlösung gewaschen und im Vakuum bei einer Temperatur von 50 bis 60°C getrocknet. Man erhält 16 Teile einer Verbindung, welche in Form der freien Säure der Formel 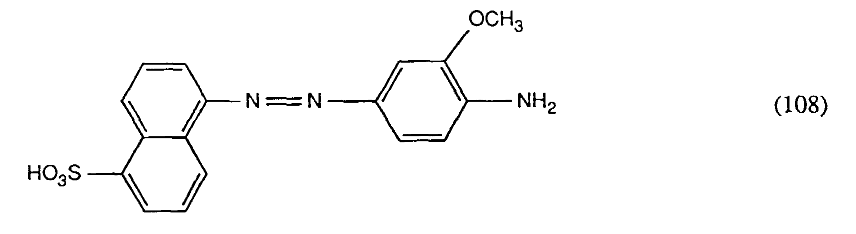 entspricht.

Beispiel 1: 1,85 Teile Cyanurchlorid werden in 25 Teilen Eis, 5 Teilen Wasser und 0,1 Teilen Dinatriumhydrogenphosphat unter Eiskühlung während 30 Minuten vermahlen.

Zur Herstellung einer zweiten Lösung werden 7,16 Teile der Verbindung der Formel 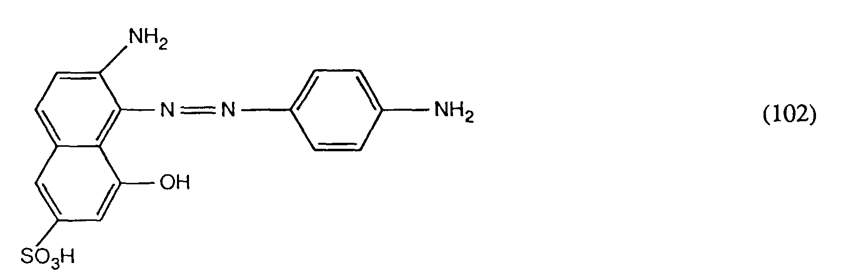 bei einer Temperatur von 25 bis 30°C und einem pH-Wert von 8,5 bis 9 in 160 Teilen Wasser gelöst. Die so erhaltene Lösung der Verbindung der Formel (102) wird zu der wie oben angegeben erhaltenen Cyanurchlorid-Anschlämmung zugetropft. Man erwärmt dann langsam auf eine Temperatur von 45 bis 50°C und erhöht den pH durch Zugabe von wässriger Natronlauge auf einen Wert von 9. Das Reaktionsgemisch wird anschliessend mit Äthanol verdünnt und dann filtriert. Nach Waschen mit einer Äthanol/Wasser-Mischung (im Verhältnis 1:1) wird der Farbstoff bei einer Temperatur von 50 bis 60°C im Vakuum getrocknet. Man erhält 5,4 Teile eines Farbstoffs, welcher in Form der freien Säure der Verbindung der Formel 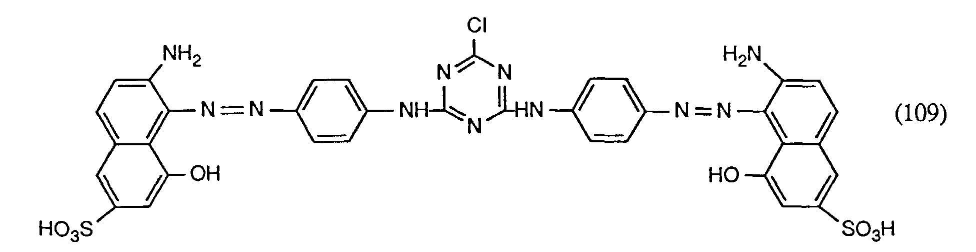 entspricht und welcher Wolle und synthetisches Polyamidfasermaterial in roten Farbtönen färbt.

Beispiele 2 bis 41: Analog zu den Angaben in Beispiel 1 können Farbstoffe der allgemeinen Formel 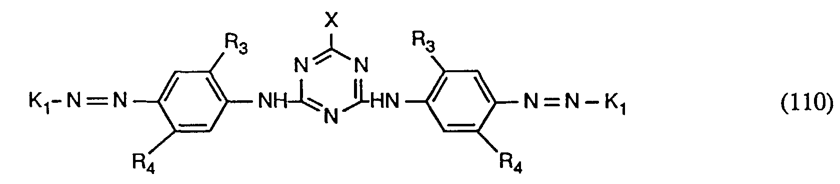 erhalten werden, worin K₁, R₃, R₄ und X die in der folgenden Tabelle 1 in den Spalten 2, 3, 4 und 5 angegebenen Bedeutungen haben. Die in der folgenden Tabelle 1 angegebenen Farbstoffe färben Wolle und synthetisches Polyamidfasermaterial in den in Spalte 6 angegebenen Farbtönen.

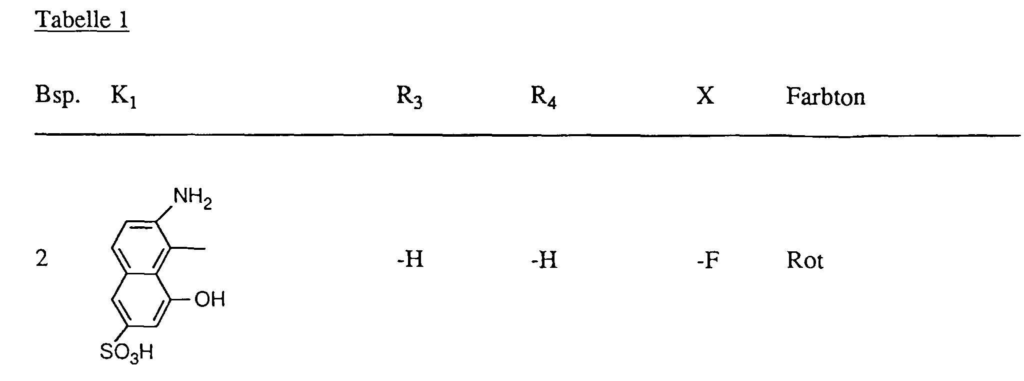

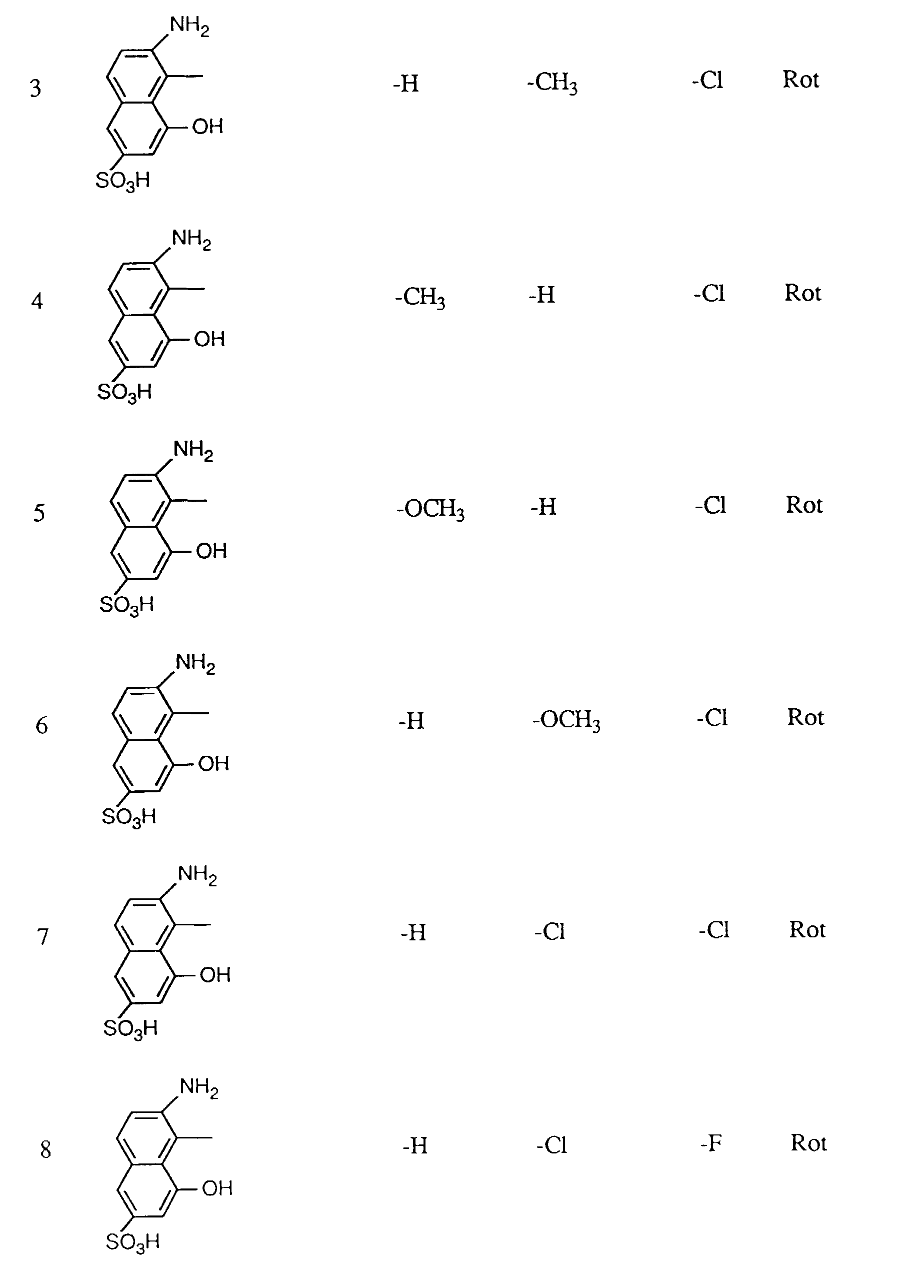

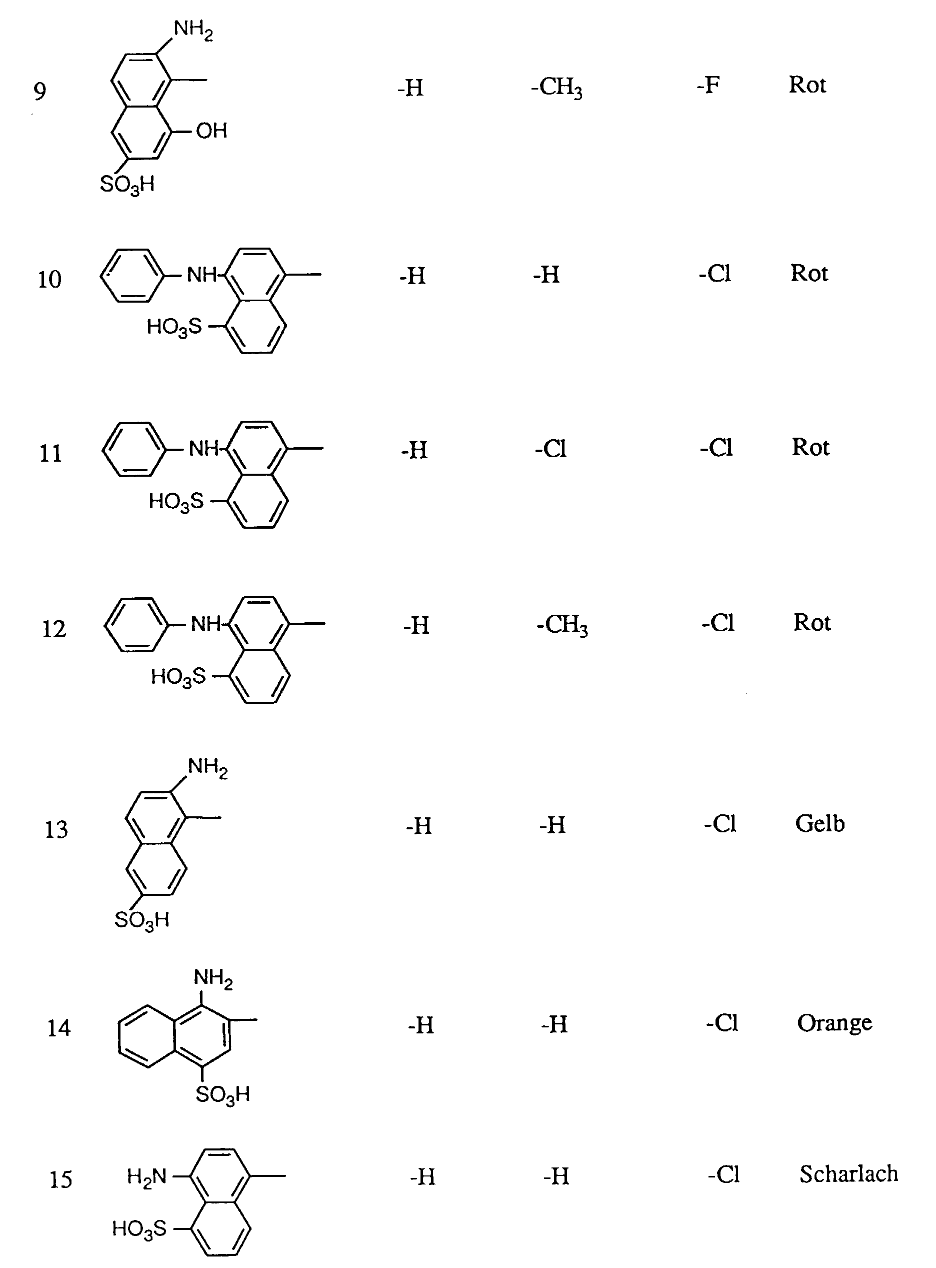

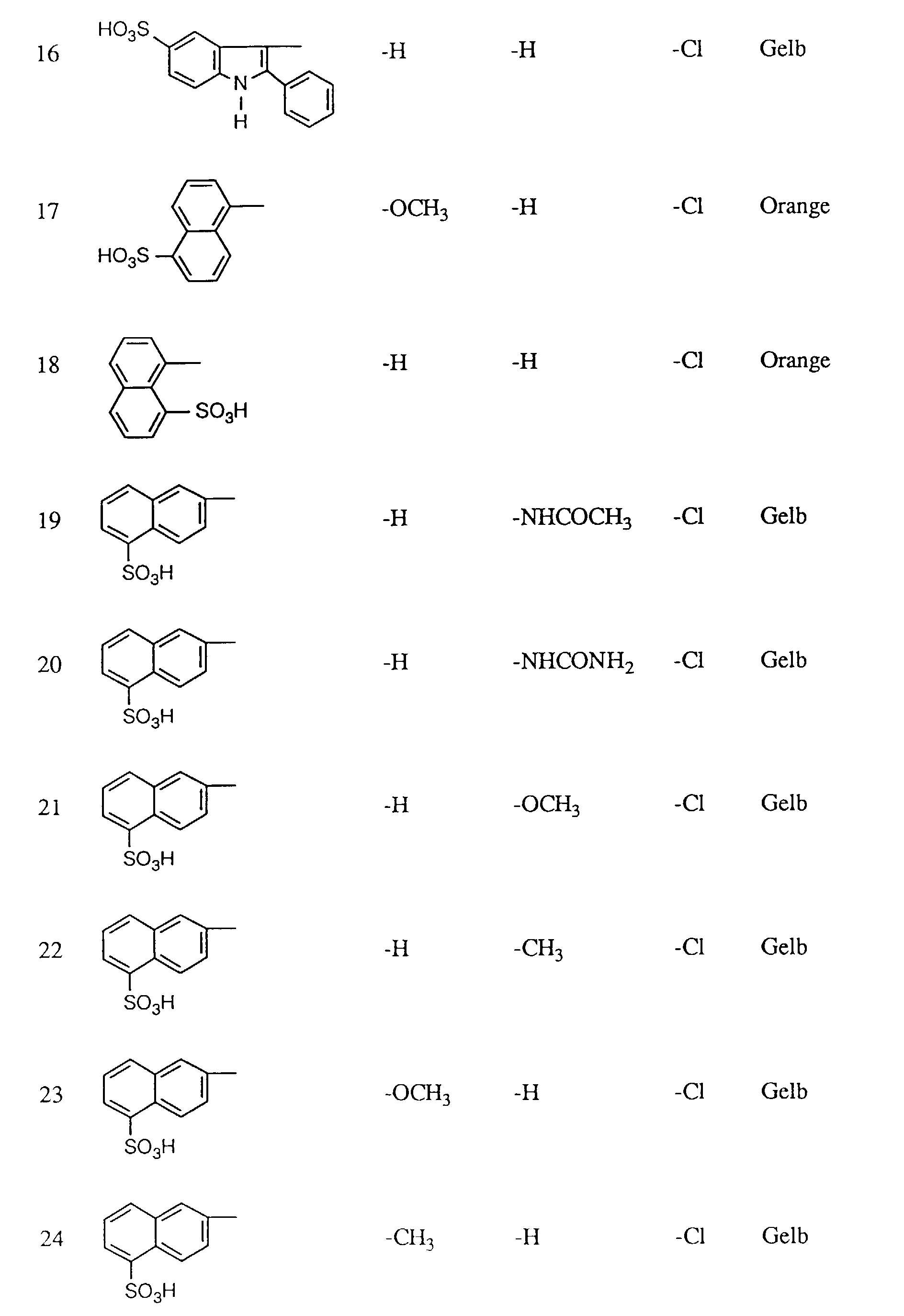

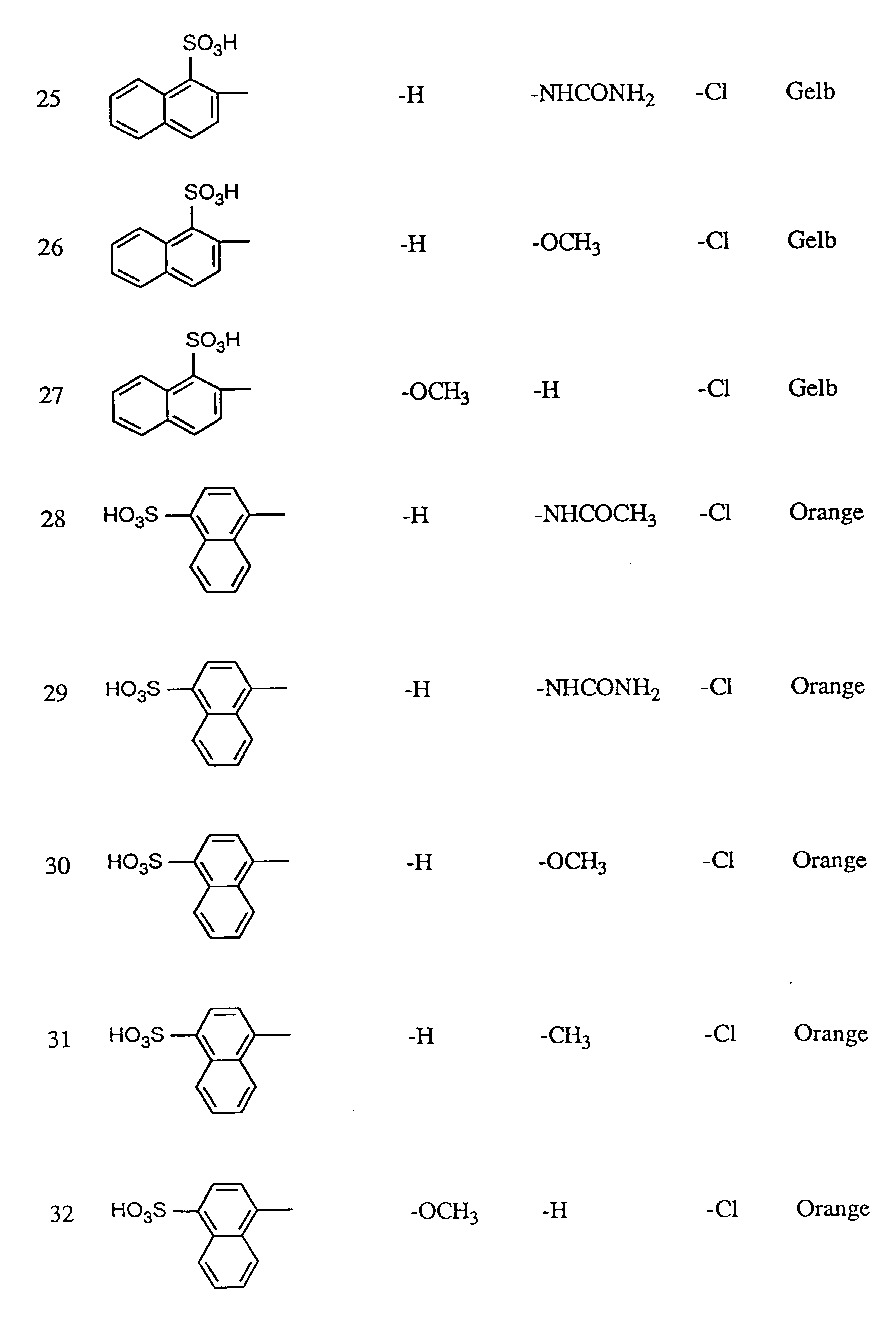

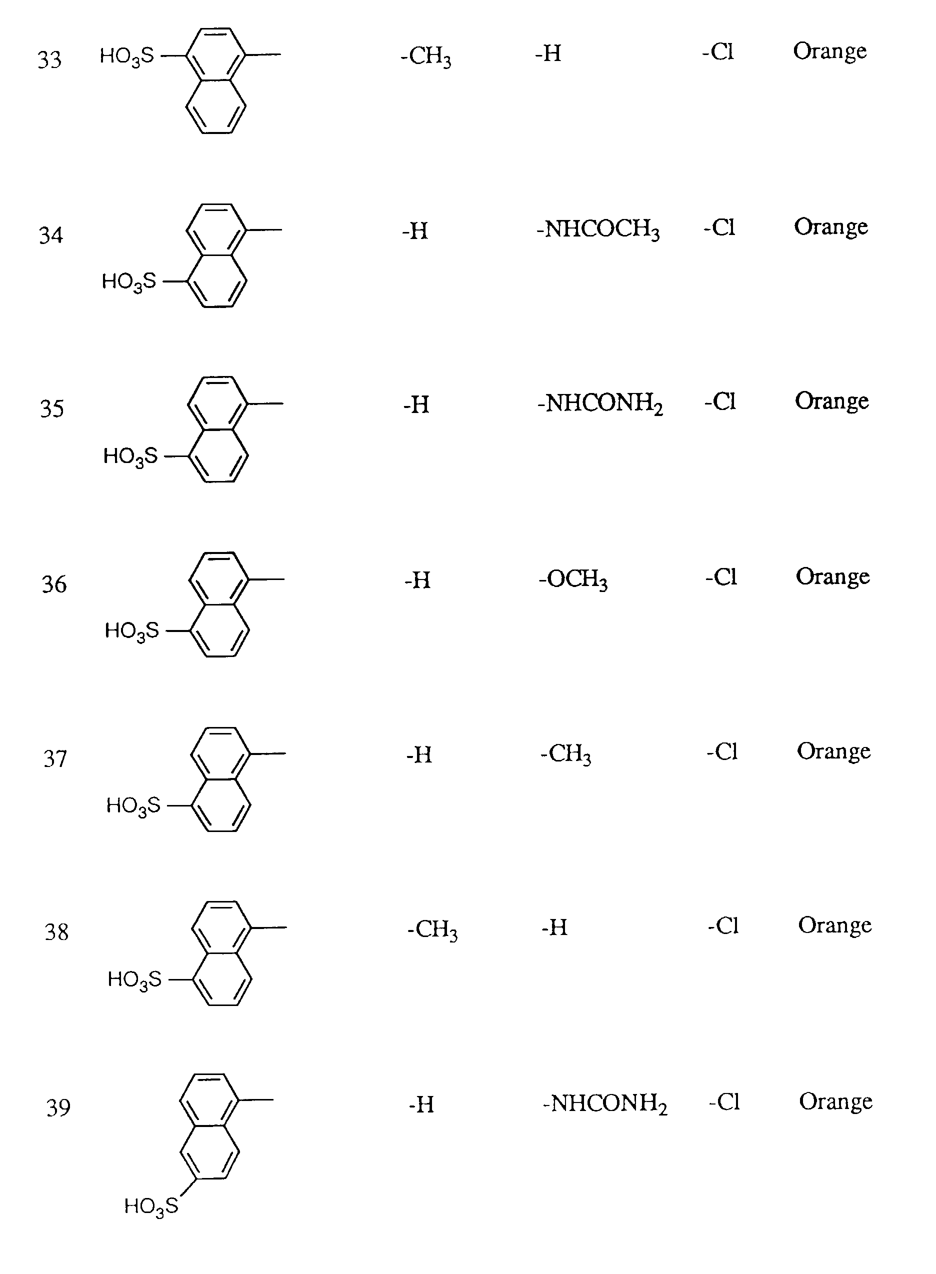

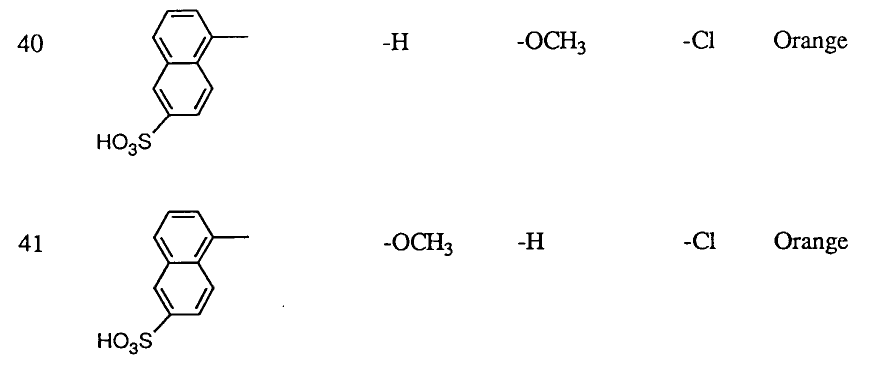

Beispiele 42 bis 48: Analog zu den Angaben in Beispiel 1 können Farbstoffe der allgemeinen Formel 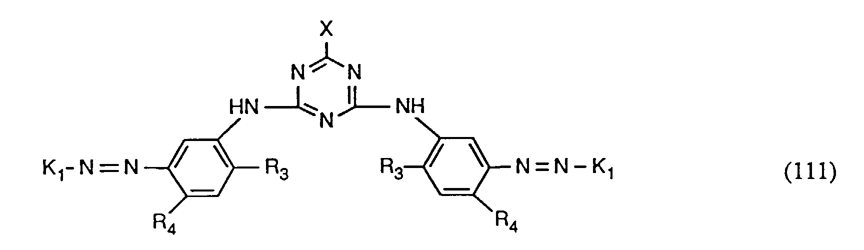 erhalten werden, worin K₁, R₃, R₄ und X die in der folgenden Tabelle 2 in den Spalten 2, 3, 4 und 5 angegebenen Bedeutungen haben. Die in der folgenden Tabelle 2 angegebenen Farbstoffe färben Wolle und synthetisches Polyamidfasermaterial in den in Spalte 6 angegebenen Farbtönen.

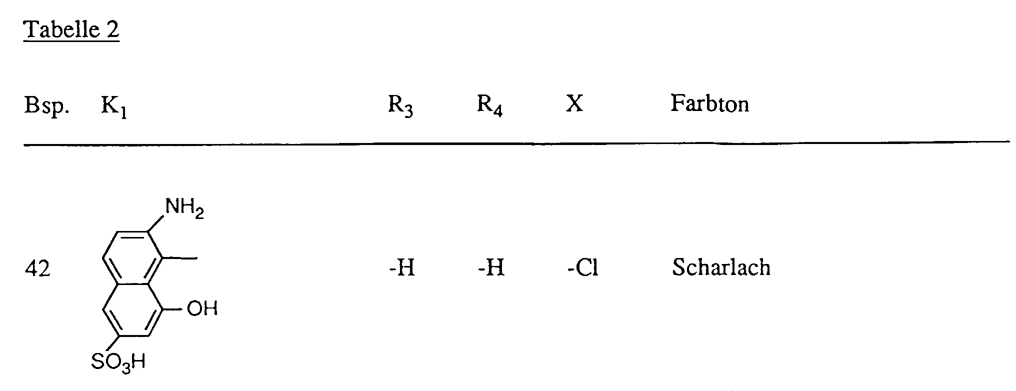

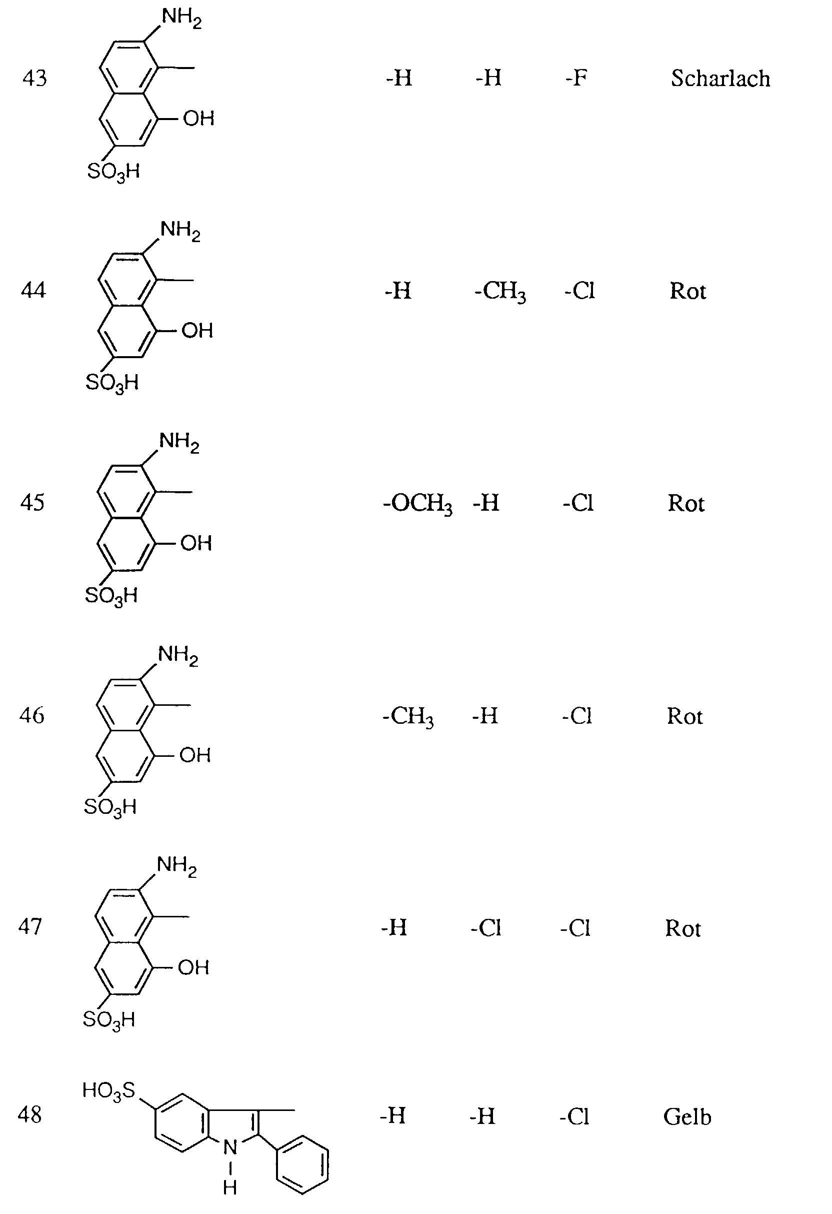

Beispiel 49: 1,85 Teile Cyanurchlorid werden in 25 Teilen Eis, 5 Teilen Wasser und 0,1 Teilen Dinatriumhydrogenphosphat unter Eiskühlung während 30 Minuten vermahlen. Zur Herstellung einer zweiten Lösung werden 3,58 Teile der Verbindung der Formel 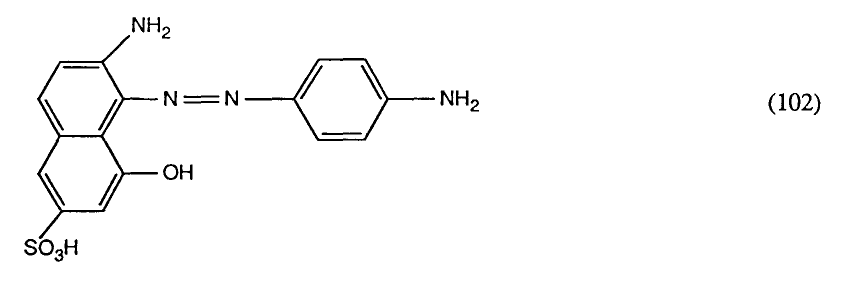 bei einer Temperatur von 25 bis 30°C und einem pH-Wert von 8,5 bis 9 in 80 Teilen Wasser gelöst. Die so erhaltene Lösung der Verbindung der Formel (102) wird zu der wie oben angegeben erhaltenen Cyanurchlorid-Anschlämmung zugetropft. Nach Verdünnung der Lösung mit wenig Aceton wird die Lösung bei einer Temperatur von 10 bis 15°C bis zur Beendigung der Reaktion durch Zugabe verdünnter, wässriger Natriumhydroxdlösung bei einem pH-Wert von 5 gehalten. Das Ende der Reaktion wird dünnschichtchromatographisch ermittelt. Man erhält 130 Teile einer Suspension, welche die in Form der freien Säure angegebene Verbindung der Formel 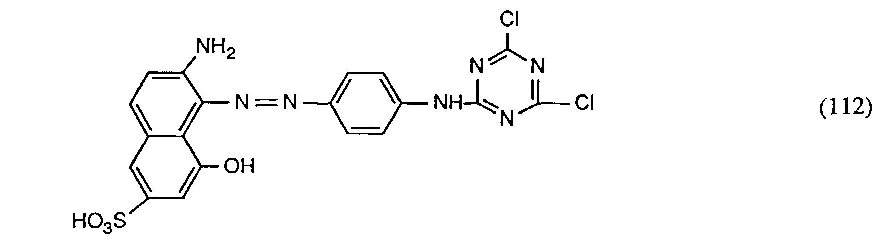 enthält.

Zu der wie oben angegeben erhältlichen Suspension wird eine Lösung, welche in 100 Teilen Wasser bei einem pH-Wert von 8,5 und bei einer Temperatur von 40°C 3,58 Teile der Verbindung der Formel 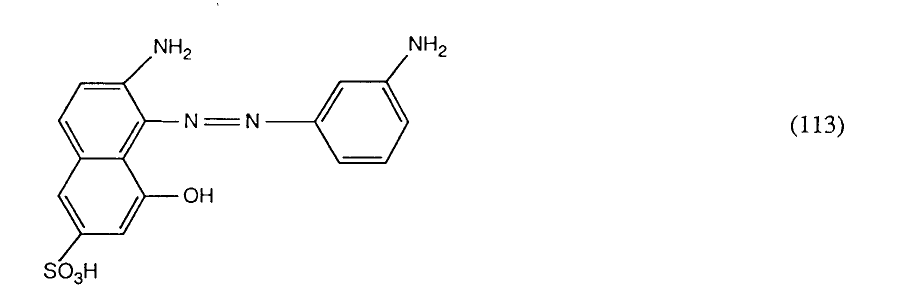 enthält, zugegeben. Man erwärmt auf eine Temperatur von 35 bis 40°C und hält den pH mit verdünnter, wässriger Natriumhydroxidlösung konstant bei einem Wert von 7. Nach Beendigung der Reaktion wird mit wenig Aceton verdünnt, filtriert, mit Aceton gewaschen und im Vakuum bei einer Temperatur von 50 bis 60°C getrocknet. Man erhält einen Farbstoff, welcher in Form der freien Säure der Verbindung der Formel 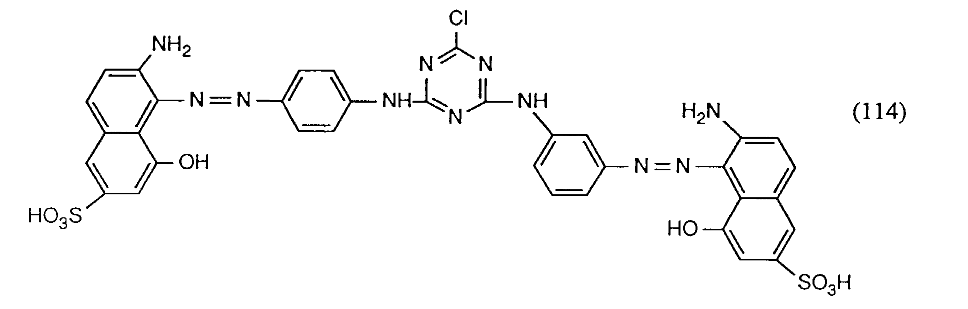 entspricht und welcher Wolle und synthetisches Polyamidfasermaterial in roten Farbtönen färbt.

Beispiele 50 bis 64: Analog zu den Angaben in Beispiel 49 können die in der folgenden Tabelle 3 in Spalte 2 angegebenen Farbstoffe erhalten werden, welche Wolle und synthetisches Polyamidfasermaterial in den in Spalte 3 angegebenen Farbtönen färben.

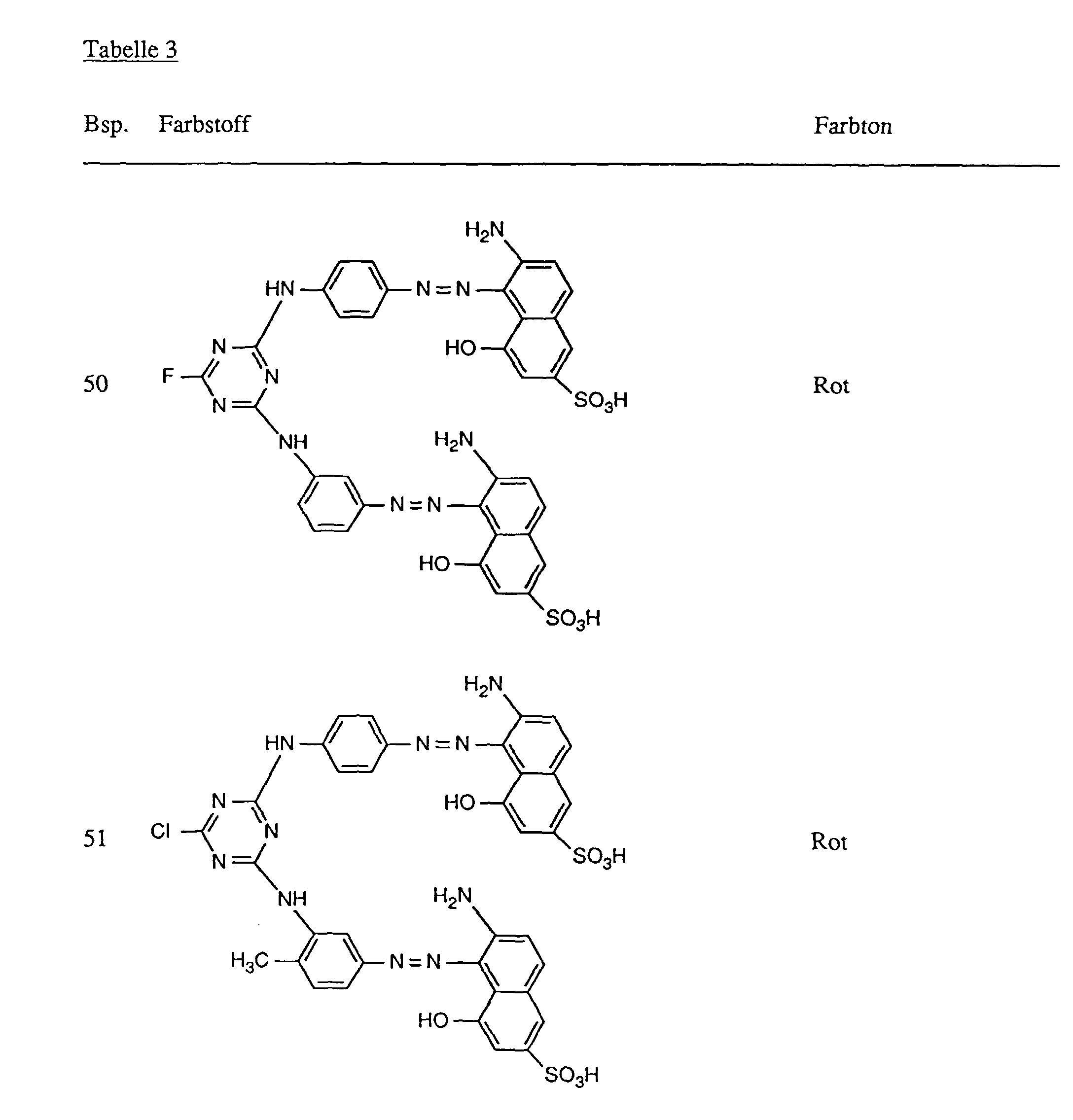

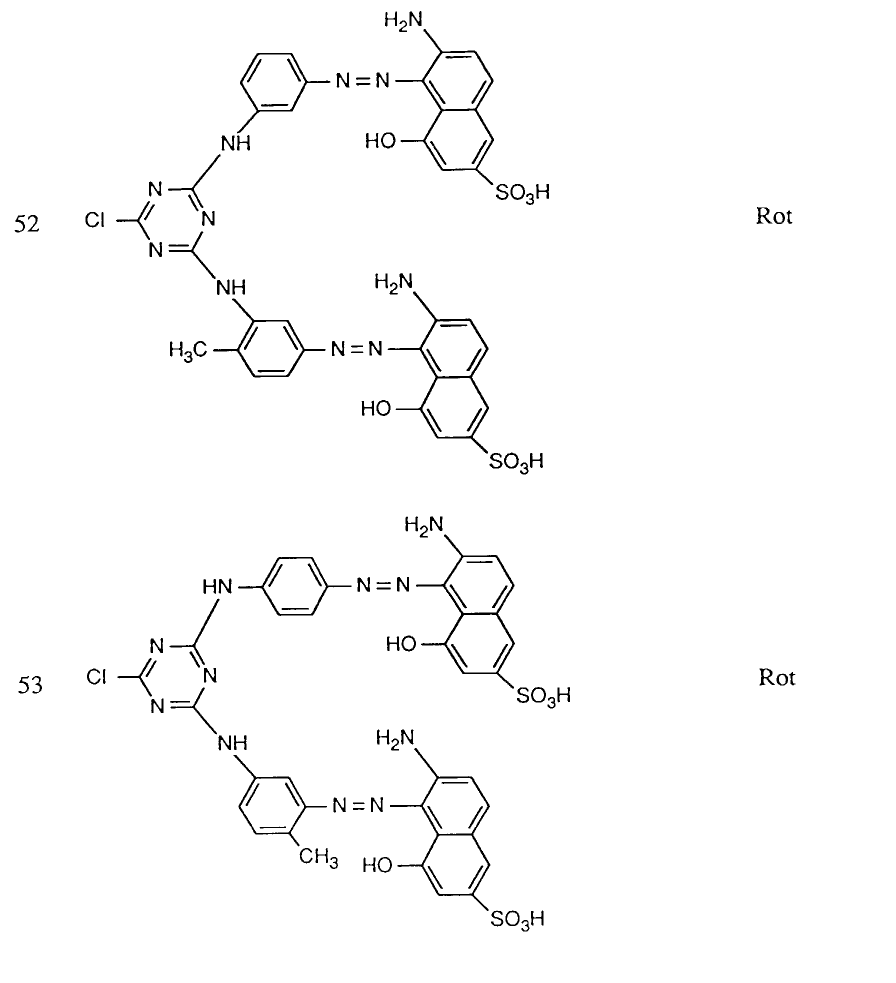

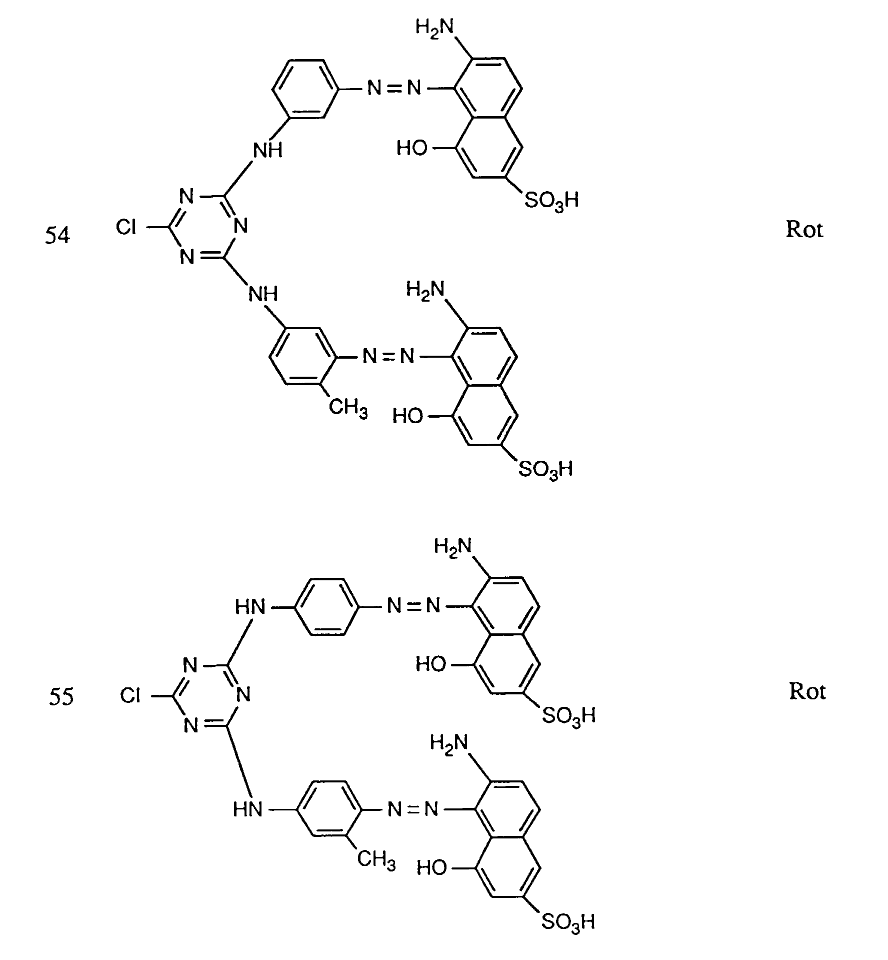

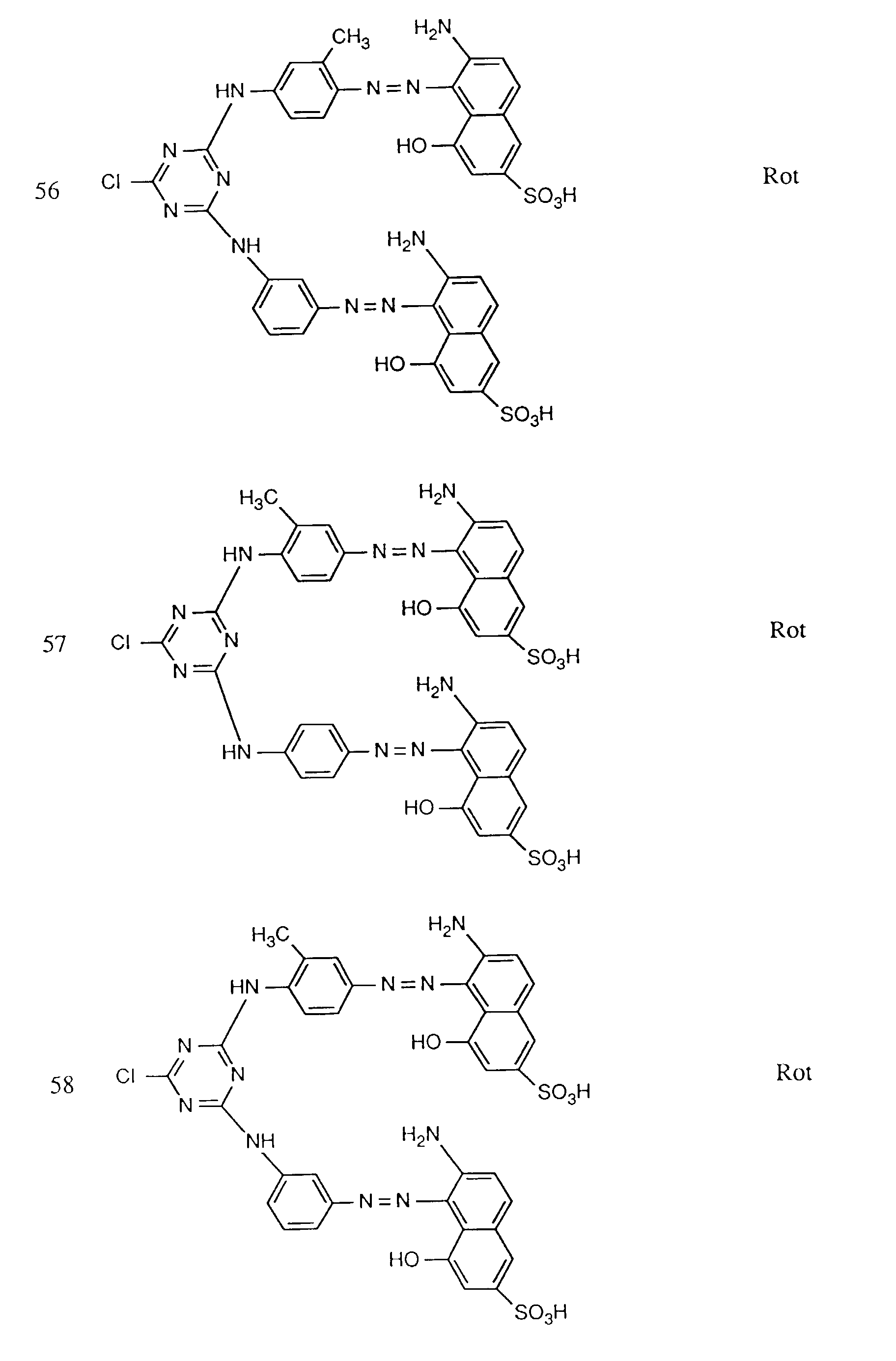

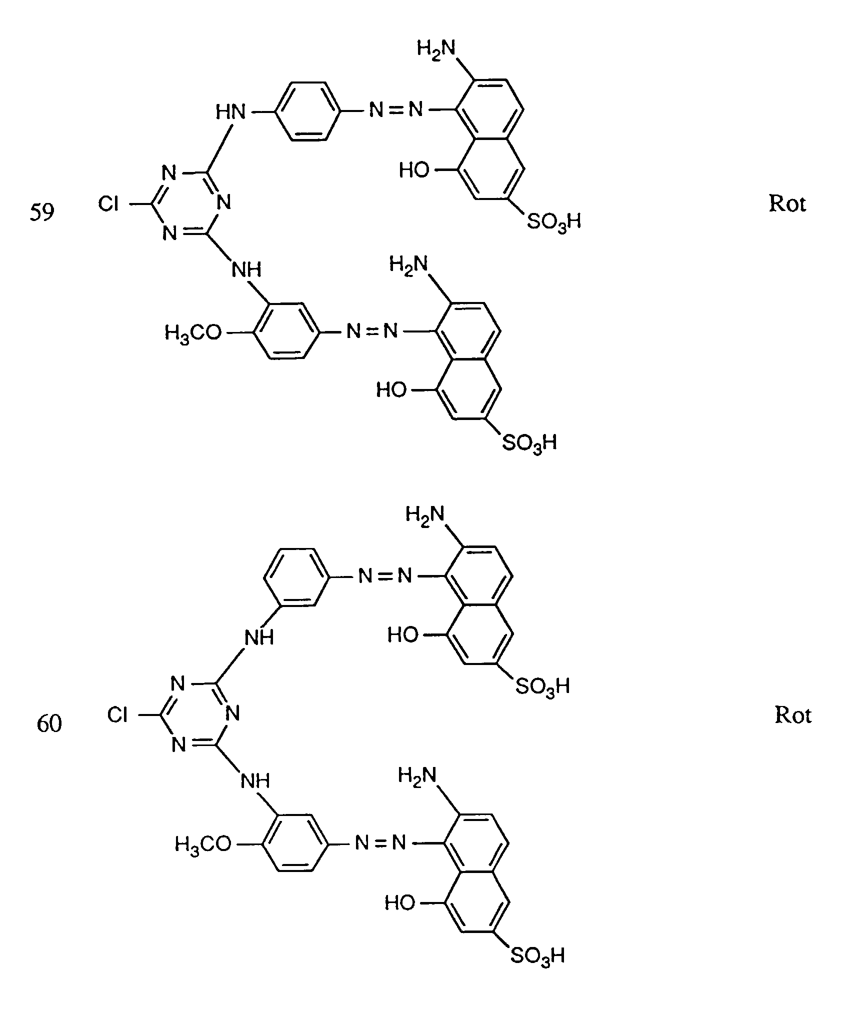

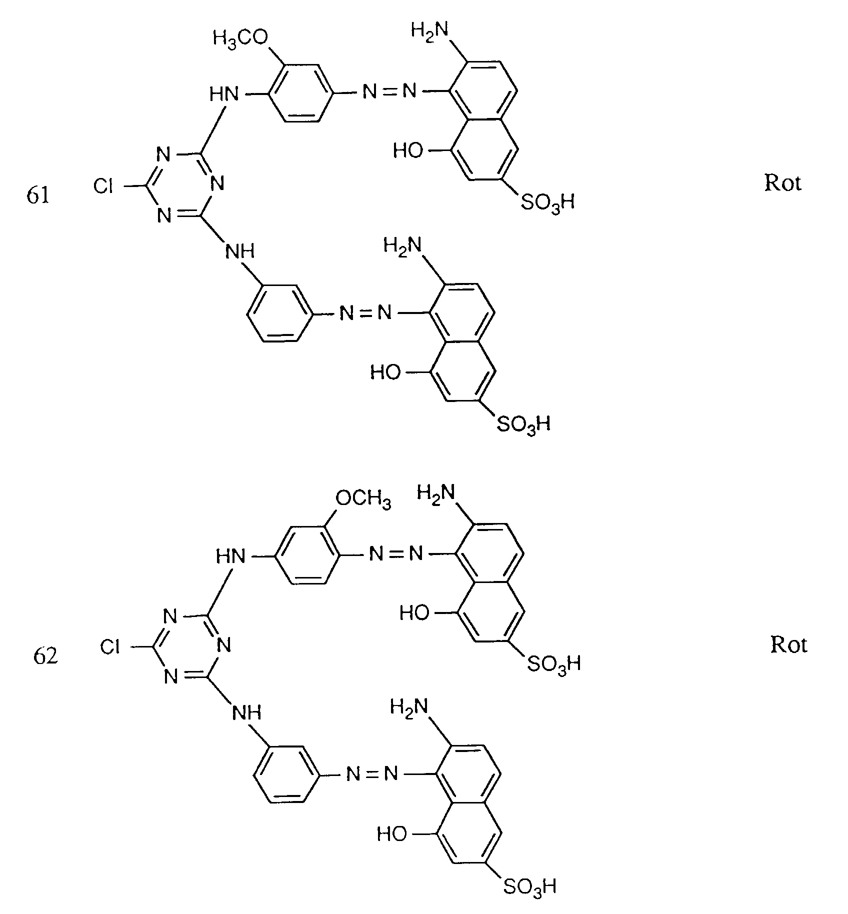

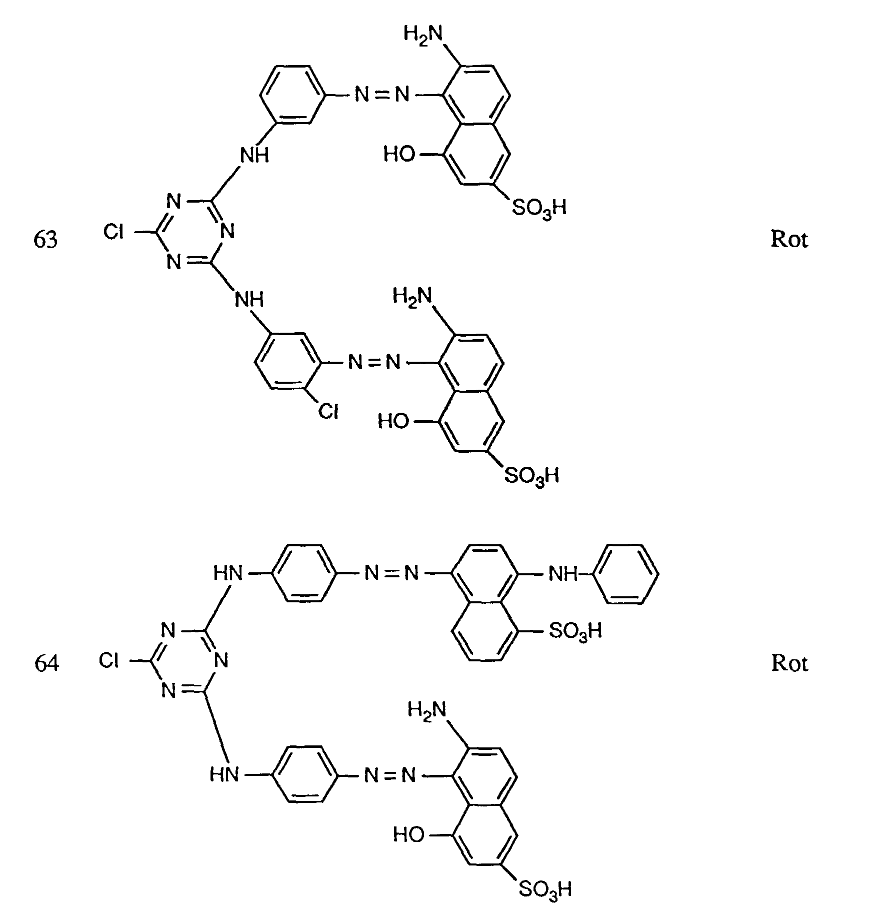

Färbevorschrift I: Man färbt 10 Teile Polyamid-6.6-Fasermaterial (Helancatrikot) in 500 Teilen einer wässrigen Flotte, die 2 g/l Ammoniumacetat enthält und mit Essigsäure auf pH 5 gestellt wird. Der Anteil des Farbstoffs gemäss Beispiel 1 beträgt 1,2%, bezogen auf das Fasergewicht. Die Färbedauer bei einer Temperatur von 98°C beträgt 30 bis 90 Minuten. Das gefärbte Fasermaterial wird anschliessend herausgenommen und wie üblich gewaschen und getrocknet. Man erhält ein rot gefärbtes Gewebestück, das gute Gesamtechtheiten aufweist.

Färbevorschrift II: 10 Teile Wollstrickgarn werden bei 30°C in ein Färbebad eingerührt, das auf 100 Teile Wasser 0,6 Teile des Farbstoffs gemäss Beispiel 1, 5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet. Man erhält eine rote Wollfärbung mit guten Echtheitseigenschaften.

Färbevorschrift III: 100 Teile Bekleidungsveloursleder werden bei 50°C in einer Lösung von 1000 Teilen Wasser und 2 Teilen 24%-igem Ammoniak während 2 Stunden aufgewalkt und anschliessend bei 60°C in einer Lösung von 1000 Teilen Wasser, 2 Teilen 24%-igem Ammoniak und 3 Teilen Farbstoff gemäss Beispiel 1 während einer Stunde gefärbt. Hierauf gibt man eine Lösung von 40 Teilen Wasser und 4 Teilen 85%-iger Ameisensäure zu und färbt noch weitere 30 Minuten. Dann werden die Leder gut gespült und gegebenenfalls noch mit 2 Teilen eines Dicyandiamid-Formaldehydkondensationsprodukts während 30 Minuten bei 50°C behandelt. Man erhält eine rote Färbung mit guten Gesamtechtheiten.

## Patentansprüche

1. Azofarbstoffe der Formel 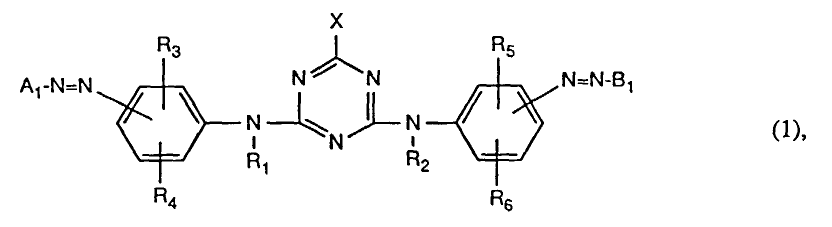 worin
R₁ und R₂ unabhängig voneinander Wasserstoff oder C₁-C₄-Alkyl,
R₃, R₄, R₅ und R₆ unabhängig voneinander Wasserstoff, C₁-C₄-Alkyl, C₁-C₄-Alkoxy, C₂-C₄-Alkanoylamino, Ureido oder Halogen sind,
X Chlor oder Fluor,
B₁ ein Rest der Benzolreihe, der Naphthalinreihe oder der heterocyclischen Reihe ist, und
A₁ ein Rest der Formel 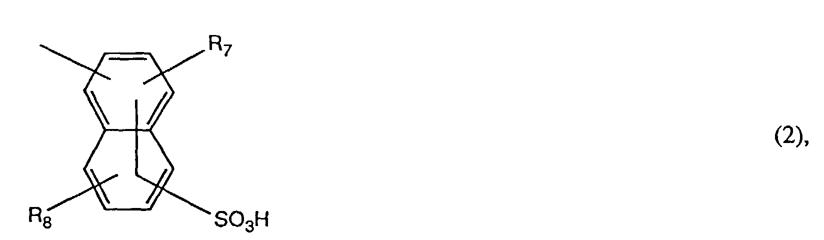 worin
R₇ Wasserstoff, Amino, N-Mono- oder N,N-Di-C₁-C₄-Alkylamino oder gegebenenfalls substituiertes Phenylamino ist und
R₈ Wasserstoff oder Hydroxyl ist,
oder A₁ ein Rest der Formel 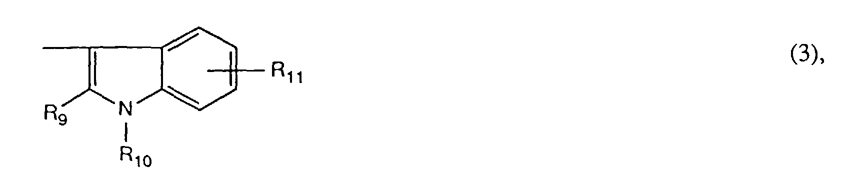 worin
R₉ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₁₀ Wasserstoff oder C₁-C₈-Alkyl und
R₁₁ Wasserstoff, C₁-C₄-Alkyl, C₁-C₄-Alkoxy, C₂-C₄-Alkanoylamino, Ureido, Halogen oder Sulfo bedeutet, ist, und
die Azofarbstoffe der Formel (1) wenigstens eine und höchstens zwei Sulfogruppen enthalten,
mit der Massgabe, dass der Rest der Formel (2) nicht 6-Sulfonaphth-2-yl bedeutet.

2. Azofarbstoffe gemäss Anspruch 1, worin
R₁ und R₂ Wasserstoff sind.

3. Azofarbstoffe gemäss einem der Ansprüche 1 und 2, worin
R₃, R₄, R₅ und R₆ unabhängig voneinander Wasserstoff, C₁-C₄-Alkyl, C₁-C₄-Alkoxy oder Halogen sind.

4. Azofarbstoffe gemäss einem der Ansprüche 1 bis 3, worin
R₃, R₄, R₅ und R₆ Wasserstoff sind.

5. Azofarbstoffe gemäss einem der Ansprüche 1 bis 4, worin
R₇ Wasserstoff, Amino oder Phenylamino ist.

6. Azofarbstoffe gemäss einem der Ansprüche 1 bis 5, worin
R₉ unsubstituiertes oder durch C₁-C₄-Alkyl, C₁-C₄-Alkoxy oder Halogen substituiertes Phenyl, R₁₀ Wasserstoff und R₁₁ Sulfo ist.

7. Azofarbstoffe gemäss einem der Ansprüche 1 bis 6, worin
B₁ ein Rest der Formel 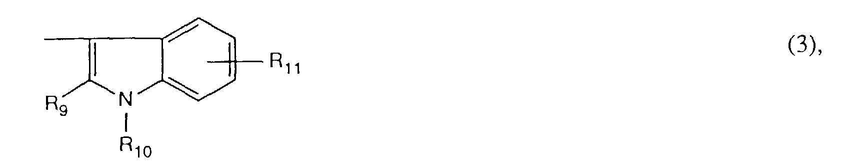 worin
R₉ Wasserstoff, C₁-C₈-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl,
R₁₀ Wasserstoff oder C₁-C₈-Alkyl und
R₁₁ Wasserstoff, C₁-C₄-Alkyl, C₁-C₄-Alkoxy, C₂-C₄-Alkanoylamino, Ureido, Halogen oder Sulfo bedeutet;
oder ein Rest der Formel 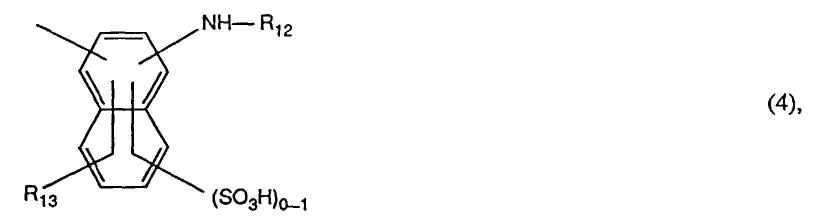 worin
R₁₂ Wasserstoff, C₁-C₄-Alkyl oder gegebenenfalls durch C₁-C₄-Alkyl, C₁-C₄-Alkoxy, C₂-C₄-Alkanoylamino, Ureido, Halogen oder Sulfo substituiertes Phenyl und
R₁₃ Wasserstoff, C₁-C₄-Alkyl, C₁-C₄-Alkoxy, C₂-C₄-Alkanoylamino, Ureido, Halogen oder Hydroxyl bedeutet;
oder ein Rest der Formel 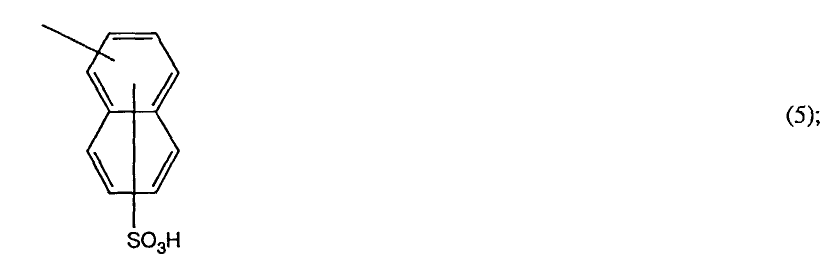 oder ein Rest der Formel 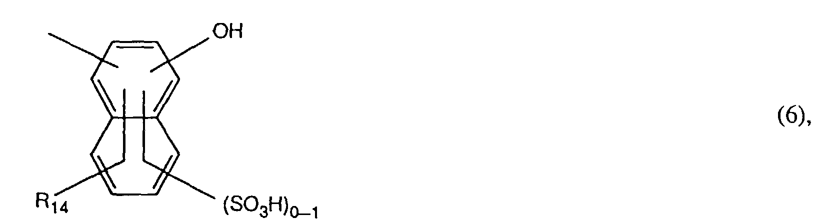 worin R₁₄ Wasserstoff, C₁-C₄-Alkyl, C₁-C₄-Alkoxy, C₂-C₄-Alkanoylamino, Ureido oder Halogen bedeutet;
oder ein Rest der Formel 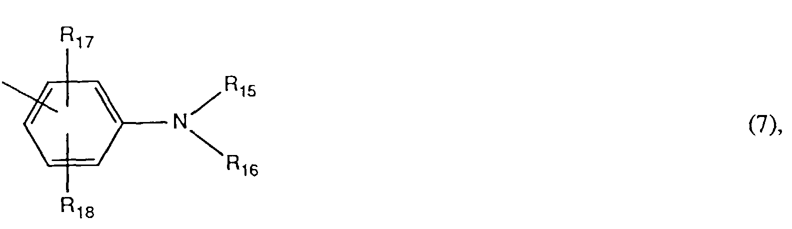 worin
R₁₅ und R₁₆ unabhängig voneinander Wasserstoff oder gegebenenfalls durch Hydroxyl oder Phenyl substituiertes C₁-C₄-Alkyl sind, wobei der Phenylrest unsubstituiert oder durch C₁-C₄-Alkyl, C₁-C₄-Alkoxy, C₂-C₄-Alkanoylamino, Ureido, Halogen oder Sulfo substituiert ist, und
R₁₇ und R₁₈ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 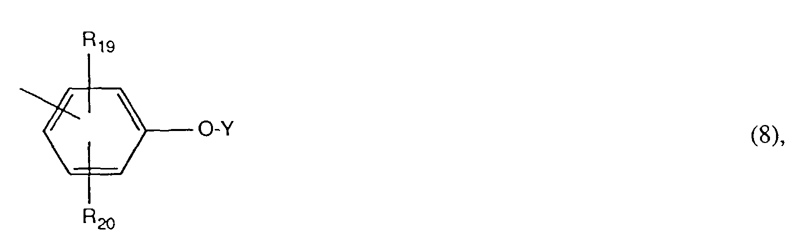 worin
Y Wasserstoff oder gegebenenfalls durch Hydroxyl substituiertes C₁-C₄-Alkyl ist und
R₁₉ und R₂₀ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 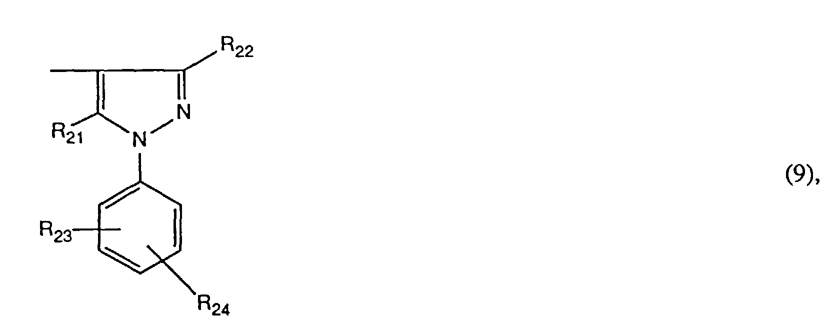 worin
R₂₁ Amino oder Hydroxyl,
R₂₂ Methyl oder Carboxyl und
R₂₃ und R₂₄ unabhängig voneinander Wasserstoff, C₁-C₄-Alkyl, C₁-C₄-Alkoxy, C₂-C₄-Alkanoylamino, Ureido, Halogen oder Sulfo bedeuten;
oder ein Rest der Formel 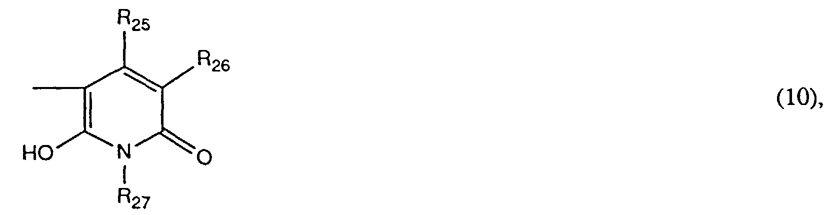 worin
R₂₅ Wasserstoff oder C₁-C₄-Alkyl,
R₂₆ Cyano, Carbamoyl oder Sulfomethyl und
R₂₇ Wasserstoff, C₁-C₄-Alkyl oder unsubstituiertes oder durch C₁-C₄-Alkyl, C₁-C₄-Alkoxy, C₂-C₄-Alkanoylamino, Ureido, Halogen oder Sulfo substituiertes Phenyl bedeutet; ist.

8. Azofarbstoffe gemäss Anspruch 7, worin
B₁ ein Rest der Formel (3), (4) oder (5) ist

9. Azofarbstoffe gemäss Anspruch 7, worin
B₁ ein Rest der Formel (3), (4) oder (5) ist,
R₁ und R₂ Wasserstoff,
R₃, R₄, R₅ und R₆ unabhängig voneinander Wasserstoff, C₁-C₄-Alkyl, C₁-C₄-Alkoxy oder Halogen sind,
R₇ Wasserstoff, Amino oder Phenylamino ist,
R₉ unsubstituiertes oder durch C₁-C₄-Alkyl, C₁-C₄-Alkoxy oder Halogen substituiertes Phenyl,
R₁₀ Wasserstoff und
R₁₁ Sulfo ist.

10. Azofarbstoffe gemäss einem der Ansprüche 1 bis 9, worin
A₁ und B₁ unabhängig voneinander einen Rest der Formel 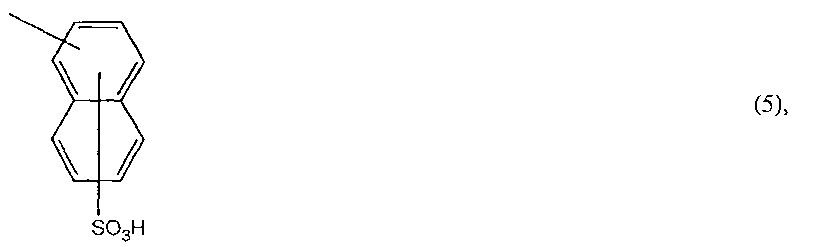 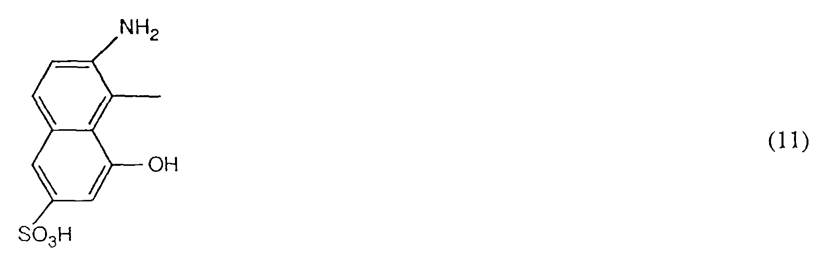 oder 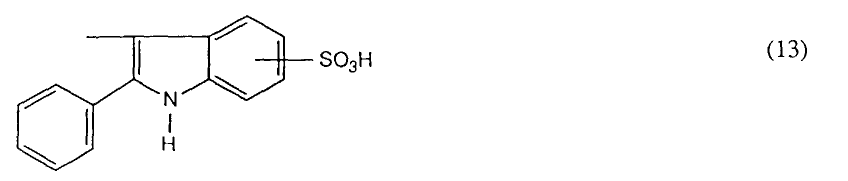 darstellen, wobei A₁ in der Bedeutung als Rest der Formel (5) nicht 6-Sulfonaphth-2-yl bedeutet.

11. Azofarbstoffe gemäss Anspruch 10, worin
A₁ und B₁ unabhängig voneinander einen Rest der Formel (5) oder (11) bedeuten.

12. Azofarbstoffe gemäss einem der Ansprüche 1 bis 11, worin
A₁ und B₁ identische Bedeutungen haben.

13. Azofarbstoffe gemäss Anspruch 1 der Formel 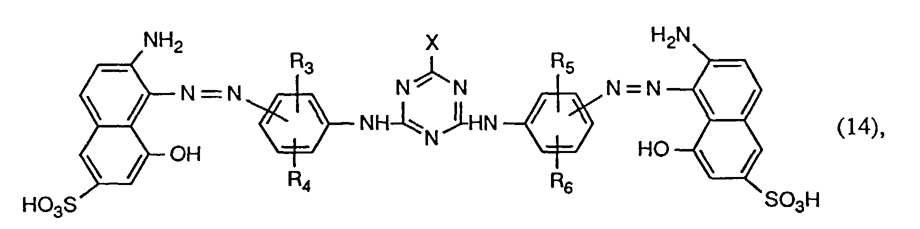 worin R₃, R₄, R₅ und R₆ unabhängig voneinander Wasserstoff, C₁-C₄-Alkyl, C₁-C₄-Alkoxy oder Halogen sind.

14. Verfahren zur Herstellung von Azofarbstoffen gemäss Anspruch 1, dadurch gekennzeichnet, dass man
Cyanurchlorid oder Cyanurfluorid mit den Aminen der Formeln 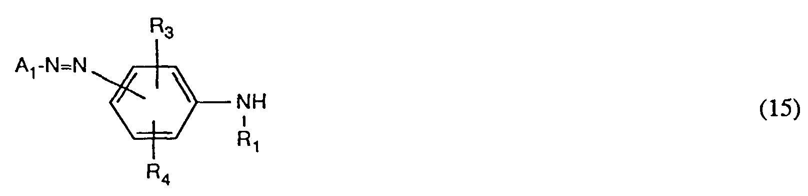 und 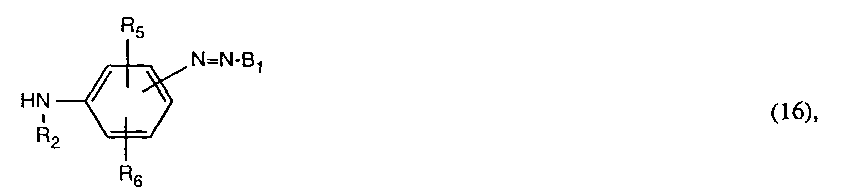 worin R₁, R₂, R₃, R₄, R₅, R₆, A₁ und B₁ die in Anspruch 1 angegebenen Bedeutungen haben, kondensiert.

15. Verwendung der Azofarbstoffe gemäss einem der Ansprüche 1 bis 13 bzw. der gemäss Anspruch 14 erhaltenen Azofarbstoffe zum Färben oder Bedrucken von hydroxylgruppenhaltigem oder stickstoffhaltigem Fasermaterial oder Papier oder Leder.

16. Verwendung gemäss Anspruch 15 zum Färben oder Bedrucken von natürlichem oder synthetischem Polyamidfasermaterial, insbesondere von Wolle.

## Claims

1. An azo dye of the formula 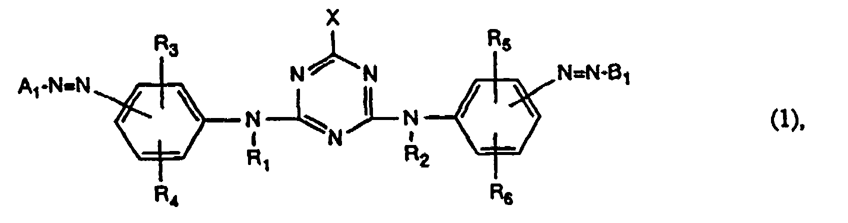 in which
R₁ and R₂ independently of one another are hydrogen or C₁-C₄alkyl,
R₃, R₄, R₅ and R₆ independently of one another are hydrogen, C₁-C₄alkyl, C₁-C₄alkoxy, C₂-C₄alkanoylamino, ureido or halogen,
X is chlorine or fluorine,
B₁ is a radical of the benzene series, of the naphthalene series or of the heterocyclic series,
and
A₁ is a radical of the formula 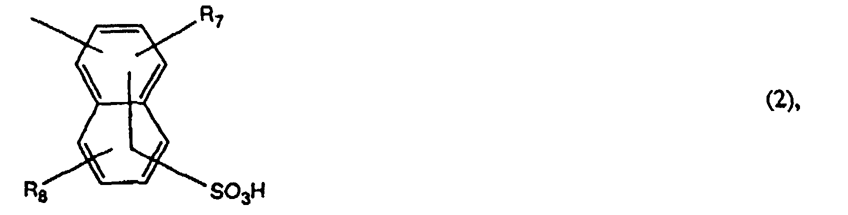 in which
R₇ is hydrogen, amino, N-mono- or N,N-di-C₁-C₄alkylamino or substituted or unsubstituted phenylamino and
R₈ is hydrogen or hydroxyl,
or A₁ is a radical of the formula 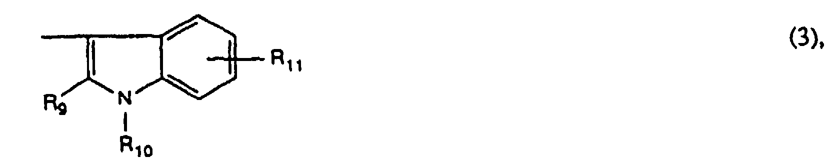 in which
R₉ is hydrogen, C₁-C₈alkyl or phenyl which is unsubstituted or substituted by C₁-C₄alkyl, C₁-C₄alkoxy, C₂-C₄alkanoylamino, ureido, halogen or sulfo,
R₁₀ is hydrogen or C₁-C₈alkyl and
R₁₁ is hydrogen, C₁-C₄alkyl, C₁-C₄alkoxy, C₂-C₄alkanoylamino, ureido, halogen or sulfo,
and
the azo dye of the formula (1) contains at least one and not more than two sulfo groups, with the proviso that the radical of the formula (2) is not 6-sulfonaphth-2-yl.

2. An azo dye according to claim 1, in which
R₁ and R₂ are hydrogen.

3. An azo dye according to claim 1 or 2, in which
R₃, R₄, R₅ and R₆ independently of one another are hydrogen, C₁-C₄alkyl, C₁-C₄alkoxy or halogen.

4. An azo dye according to any one of claims 1 to 3, in which
R₃, R₄, R₅ and R₆ are hydrogen.

5. An azo dye according to any one of claims 1 to 4, in which
R₇ is hydrogen, amino or phenylamino.

6. An azo dye according to any one of claims 1 to 6, in which
R₉ is phenyl which is unsubstituted or substituted by C₁-C₄alkyl, C₁-C₄alkoxy or halogen,
R₁₀ is hydrogen and
R₁₁ is sulfo.

7. An azo dye according to any one of claims 1 to 6, in which
B₁ is a radical of the formula 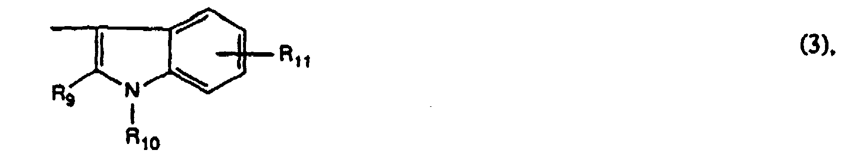 in which
R₉ is hydrogen, C₁-C₈alkyl or phenyl which is unsubstituted or substituted by C₁-C₄alkyl, C₁-C₄alkoxy, C₂-C₄alkanoylamino, ureido, halogen or sulfo,
R₁₀ is hydrogen or C₁-C₈alkyl and
R₁₁ is hydrogen, C₁-C₄alkyl, C₁-C₄alkoxy, C₂-C₄alkanoylamino, ureido, halogen or sulfo;
or a radical of the formula 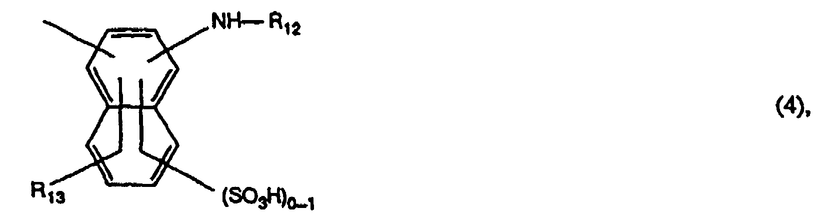 in which
R₁₂ is hydrogen, C₁-C₄alkyl or phenyl which is unsubstituted or substituted by C₁-C₄alkyl, C₁-C₄alkoxy, C₂-C₄alkanoylamino, ureido, halogen or sulfo and
R₁₃ is hydrogen, C₁-C₄alkyl, C₁-C₄alkoxy, C₂-C₄alkanoylamino, ureido, halogen or hydroxyl;
or a radical formula 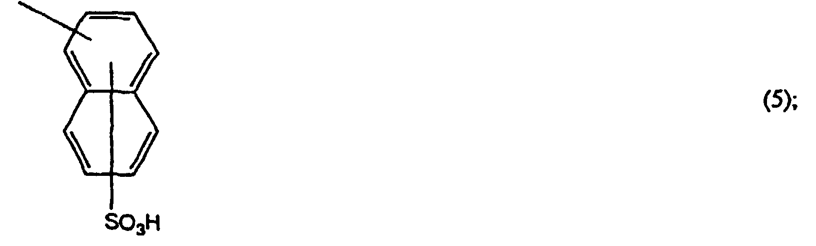 or a radical of the formula 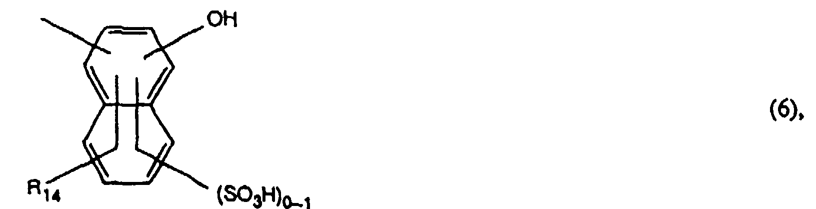 in which R₁₄ is hydrogen, C₁-C₄alkyl, C₁-C₄alkoxy, C₂-C₄alkanoylamino, ureido or halogen;
or a radical of the formula 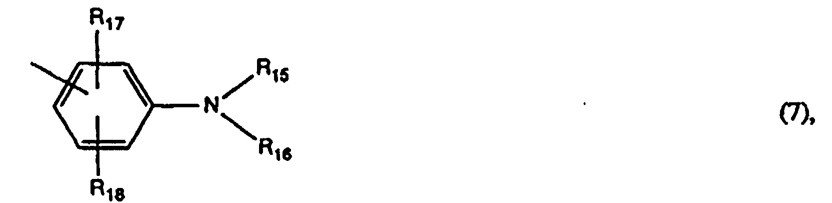 in which
R₁₅ and R₁₆ independently of one another are hydrogen or C₁-C₄alkyl which is unsubstituted or substituted by hydroxyl or phenyl, in which the phenyl radical is unsubstituted or substituted by C₁-C₄alkyl, C₁-C₄alkoxy, C₂-C₄alkanoylamino, ureido, halogen or sulfo, and
R₁₇ and R₁₈ independently of one another are hydrogen, C₁-C₄alkyl, C₁-C₄alkoxy, C₂-C₄alkanoylamino, ureido, halogen or sulfo;
or a radical of the formula 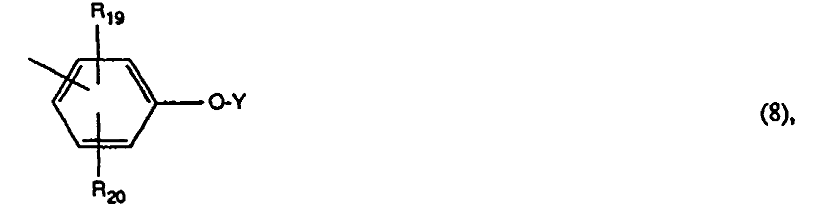 in which Y is hydrogen or C₁-C₄alkyl is unsubstituted or substituted by hydroxyl and R₁₉ and R₂₀ independently of one another are hydrogen, C₁-C₄alkyl, C₁-C₄alkoxy, C₂-C₄alkanoylamino, ureido, halogen or sulfo;
or a radical of the formula 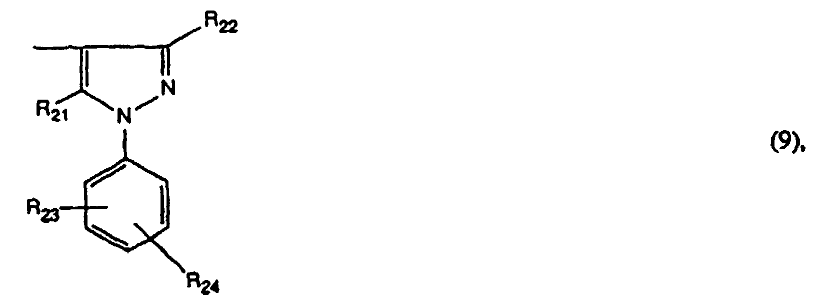 in which
R₂₁ is amino or hydroxyl,
R₂₂ is methyl or carboxyl and R₂₃ and R₂₄ independently of one another are hydrogen, C₁-C₄alkyl, C₁-C₄alkoxy, C₂-C₄alkanoylamino, ureido, halogen or sulfo;
or a radical of the formula 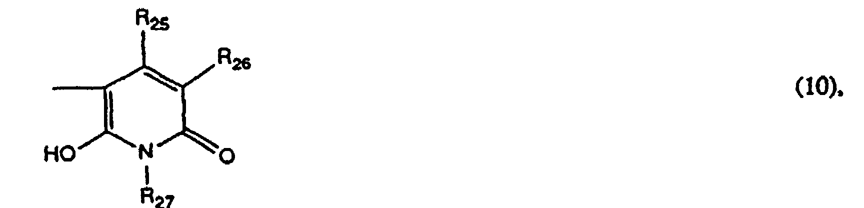 in which
R₂₅ is hydrogen or C₁-C₄alkyl,
R₂₆ is cyano, carbamoyl or sulfomethyl and
R₂₇ is hydrogen, C₁-C₄alkyl or phenyl which is unsubstituted or substituted by C₁-C₄alkyl, C₁-C₄alkoxy, C₂-C₄alkanoylamino, ureido, halogen or sulfo.

8. An azo dye according to claim 7, in which
B₁ is a radical of the formula (3), (4) or (5).

9. An azo dye according to claim 7, in which
B₁ is a radical of the formula (3), (4) or (5),
R₁ and R₂ are hydrogen,
R₃, R₄, R₅, and R₆ independently of one another are hydrogen, C₁-C₄alkyl, C₁-C₄alkoxy or halogen,
R₇ is hydrogen, amino or phenylamino,
R₉ is phenyl which is unsubstituted or substituted by C₁-C₄alkyl, C₁-C₄alkoxy or halogen,
R₁₀ is hydrogen and
R₁₁ is sulfo.

10. An azo dye according to any one of claims 1 to 9, in which
A₁ and B₁ independently of one another are a radical of the formula 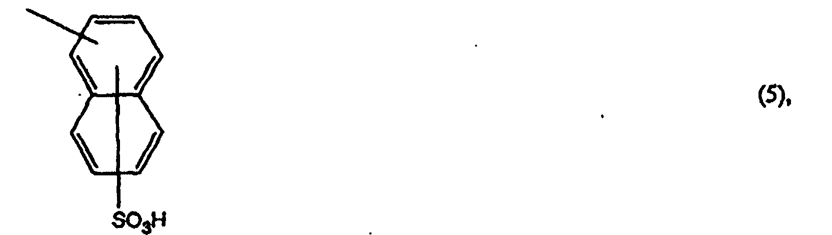 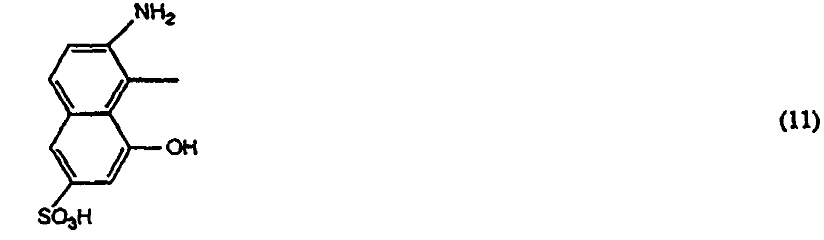 or 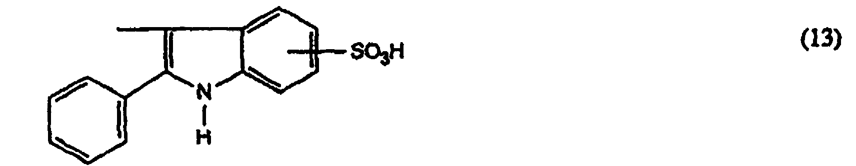 in which A₁ as a radical of the formula (5) is not 6-sulfonaphth-2-yl.

11. An azo dye according to claim 10, in which
A₁ and B₁ independently of one another are a radical of the (5) or (11).

12. An azo dye according to any one of claims 1 to 11, in which
A₁ and B₁ are identical.

13. An azo dye according to claim 1, of the formula 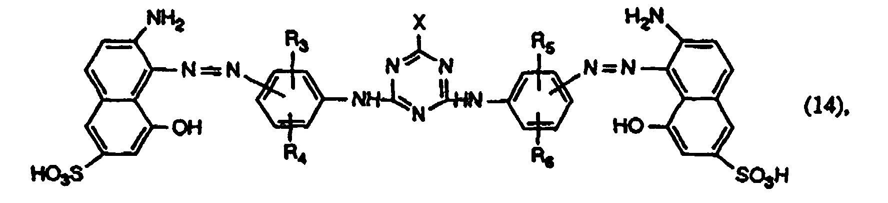 in which R₃, R₄, R₅ and R₆ independently of one another are hydrogen, C₁-C₄alky, C₁-C₄alkoxy or halogen.

14. A process for the preparation of an azo dye according to claim 1, which comprises subjecting cyanuric chloride or cyanuric fluoride to a condensation reaction with the amines of the formulae 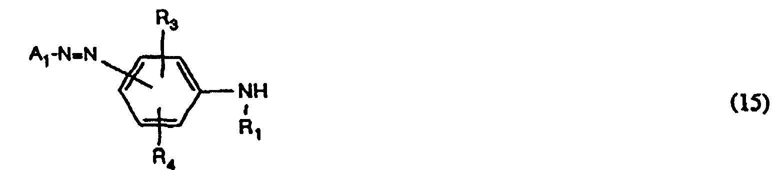 and 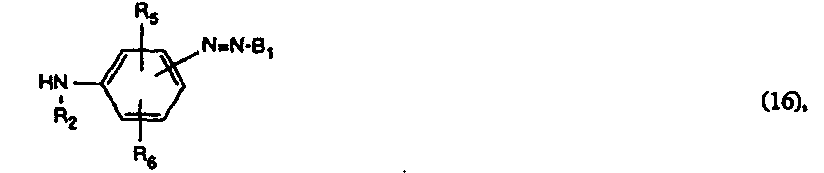 in which R₁, R₂, R₃, R₄, R₅, R₆, A₁ and B₁ are as defined in claim 1.

15. The use of an azo dye according to any one of claims 1 to 13 or of an azo dye obtained according to claim 4 for dyeing or printing fibre material containing hydroxyl groups or nitrogen, or paper or leather.

16. The use according to claim 13 for dyeing or printing naturally occurring or synthetic polyamide fibre material, in particular wool.

## Revendications

1. Colorant azoïque de formule 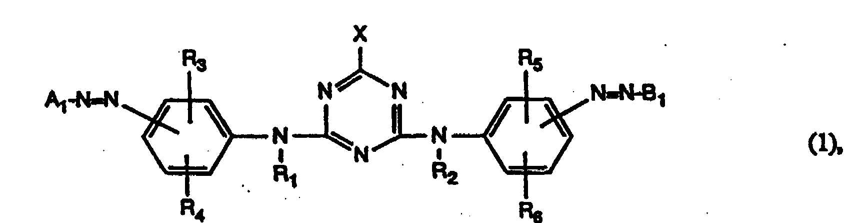 dans laquelle
R₁ et R₂ représentent indépendamment l'un de l'autre un atome d'hydrogène ou un groupe alkyle en C₁ à C₄,
R₃, R₄, R₅ et R₆ représentent indépendamment les uns des autres un atome d'hydrogène, un groupe alkyle en C₁ à C₄, alcoxy en C₁ à C₄, alcanoylamino en C₂ à C₄, uréido ou un atome d'halogène,
X représente un atome de chlore ou de fluor,
B₁ représente un groupe de type benzénique, de type naphtalénique ou de type hétérocyclique, et
A₁ représente un groupe de formule 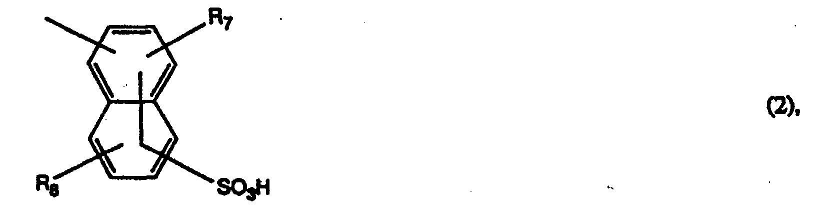
dans laquelle
R₇ représente un atome d'hydrogène, un groupe amino, un groupe N-mono- ou N,N-dialkylamino en C₁ à C₄ ou phénylamino éventuellement substitué et
R₈ représente un atome d'hydrogène ou un groupe hydroxyle,
ou A₁ représente un groupe de formule 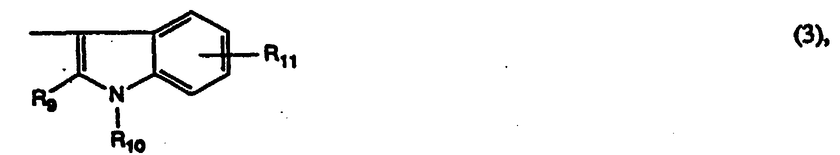 dans laquelle
R₉ représente un atome d'hydrogène, un groupe alkyle en C₁ à C₈, ou phényle non substitué ou substitué par un groupe alkyle en C₁ à C₄, alcoxy en C₁ à C₄ alcoxy en C₁ à C₄, alcanoylamino en C₂ à C₄, uréido, un atome d'halogène ou un groupe sulfo,
R₁₀ représente un atome d'hydrogène ou un groupe alkyle en C₁ à C₈,
R₁₁ représente un atome d'hydrogène, un groupe alkyle en C₁ à C₄, alcoxy en C₁ à C₄, alcanoylamino en C₂ à C₄, uréido, un atome d'halogène ou un groupe sulfo, et
les colorants de formule (1) contiennent au moins un et au plus deux groupes sulfo,
à la condition que le groupe de formule (2) ne représente pas le radical 6-sulfonapht-2-yle.

2. Colorant azoïque selon la revendication 1, dans lequel
R₁ et R₂ sont un atome d'hydrogène.

3. Colorant azoïque selon l'une des revendications 1 à 2, dans lequel
R₃, R₄, R₅ et R₆ représentent indépendamment les uns des autres un atome d'hydrogène, un groupe alkyle en C₁ à C₄, alcoxy en C₁ à C₄ ou un atome d'halogène.

4. Colorant azoïque selon l'une des revendications 1 à 3, dans lequel
R₃, R₄, R₅ et R₆ représentent un atome d'hydrogène.

5. Colorant azoïque selon l'une des revendications 1 à 4, dans lequel
R₇ représente un atome d'hydrogène, un groupe amino ou phénylamino.

6. Colorant azoïque selon l'une des revendications 1 à 5, dans lequel
R₉ représente un groupe phényle non substitué ou substitué par un groupe alkyle en C₁ à C₄, alcoxy en C₁ à C₄ ou un atome d'halogène, R₁₀ est un atome d'hydrogène et R₁₁ est un groupe sulfo.

7. Colorant azoïque selon l'une des revendications 1 à 6, dans lequel
B₁ représente un groupe de formule 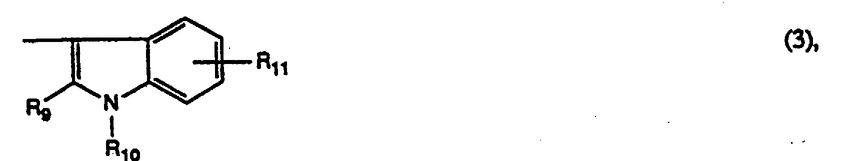 dans laquelle
R₉ représente un atome d'hydrogène, un groupe alkyle en C₁ à C₈, ou phényle non substitué ou substitué par un groupe alkyle en C₁ à C₄, alcoxy en C₁ à C₄, alcanoylamino en C₂ à C₄, uréido, un atome d'halogène ou un groupe sulfo;
R₁₀ représente un atome d'hydrogène ou un groupe alkyle en C₁ à C₈ et
R₁₁ représente un atome d'hydrogène, un groupe alkyle en C₁ à C₄, alcoxy en C₁ à C₄, alcanoylamino en C₂ à C₄, uréido, un atome d'halogène ou un groupe sulfo ;
ou un groupe de formule 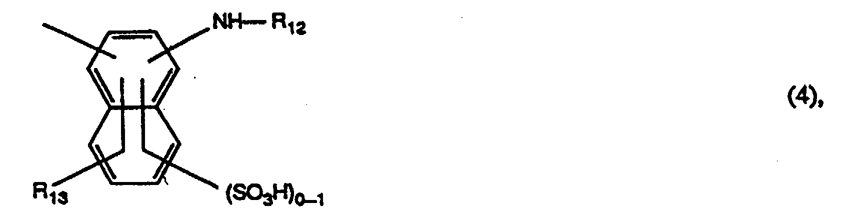 dans laquelle
R₁₂ représente un atome d'hydrogène, un groupe alkyle en C₁ à C₄ ou phényle éventuellement substitué par un groupe alkyle en C₁ à C₄, alcoxy en C₁ à C₄, alcanoylamino en C₂ à C₄, uréido, un atome d'halogène ou un groupe sulfo et
R₁₃ représente un atome d'hydrogène, un groupe alkyle en C₁ à C₄, alcoxy en C₁ à C₄, alcanoylamino en C₂ à C₄, uréido, un atome d'halogène ou un groupe hydroxyle;
ou un groupe de formule 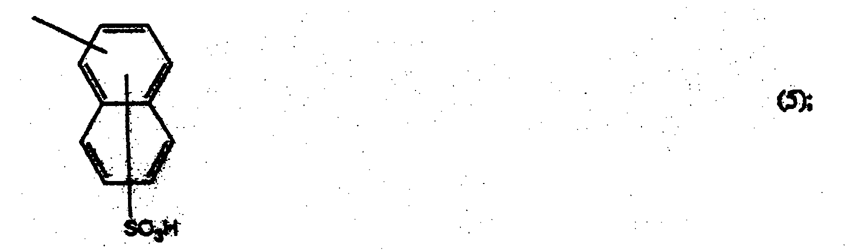 ou un groupe de formule 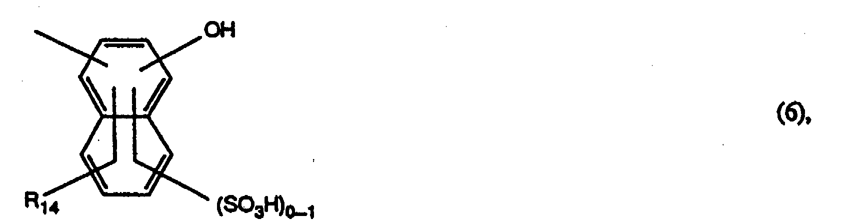 dans laquelle
R₁₄ représente un atome d'hydrogène, un groupe alkyle en C₁ à C₄, alcoxy en C₁ à C₄, alcanoylamino en C₂ à C₄, uréido ou un atome d'halogène;
ou un groupe de formule 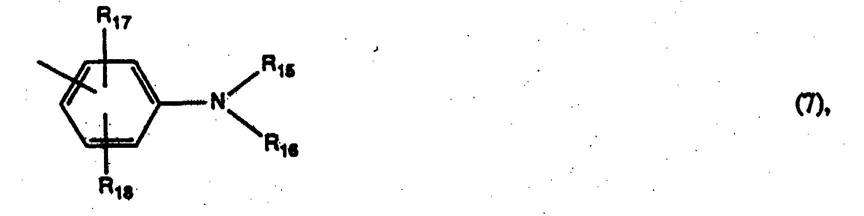 dans laquelle
R₁₅ et R₁₆ représentent indépendamment l'un de l'autre un atome d'hydrogène ou un groupe alkyle en C₁ à C₄ éventuellement substitué par un groupe hydroxyle ou phényle, le groupe phényle étant non substitué ou substitué par un groupe alkyle en C₁ à C₄, alcoxy en C₁ à C₄, alcanoylamino en C₂ à C₄, uréido, un atome d'halogène ou un groupe sulfo et
R₁₇ et R₁₈ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo;
ou un groupe de formule 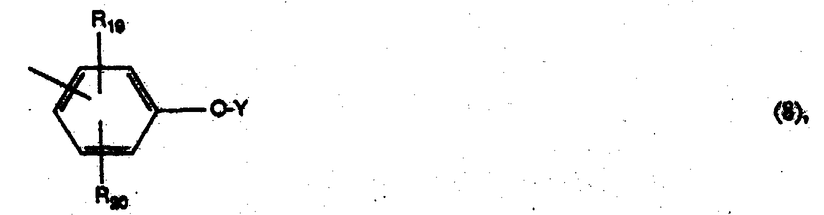 dans laquelle
Y représente un groupe alkyle en C₁ à C₄ éventuellement substitué par un groupe hydroxyle et
R₁₉ et R₂₀ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo;
ou un groupe de formule 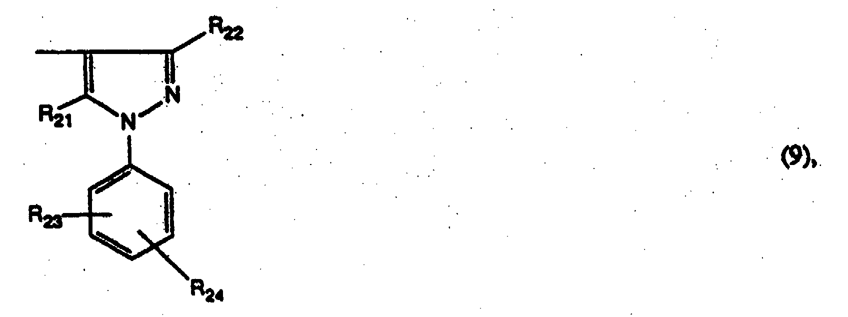 dans laquelle
R₂₁ représente un groupe amino ou hydroxyle,
R₂₂ représente un groupe méthyle ou carboxyle et
R₂₃ et R₂₄ représentent indépendamment l'un de l'autre un atome d'hydrogène, un groupe alkyle en C₁ à C₄, alcoxy en C₁ à C₄, alcanoylamino en C₂ à C₄, uréido, un atome d'halogène ou un groupe sulfo;
ou un groupe de formule 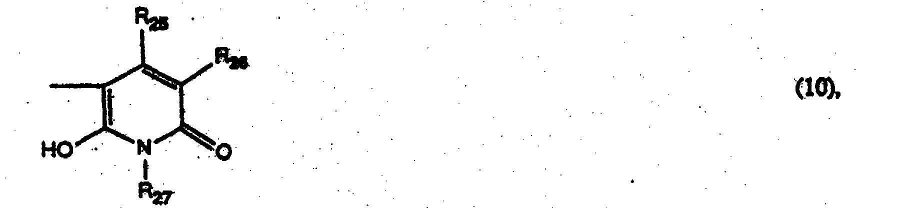 dans laquelle
R₂₅ représente un atome d'hydrogène ou un groupe alkyle en C₁ à C₄,
R₂₆ représente un groupe cyano, carbamoyle ou sulfométhyle et
R₂₇ représente un atome d'hydrogène, un groupe alkyle en C₁ à C₄ ou phényle non substitué ou substitué par un groupe alkyle en C₁ à C₄, alcoxy en C₁ à C₄, alcanoylamino en C₂ à C₄, uréido, un atome d'halogène ou un groupe sulfo.

8. Colorant azoïque selon la revendication 7, dans lequel
B₁ est un groupe de formule (3), (4) ou (5).

9. Colorant azoïque selon la revendication 7, dans lequel
B₁ est un groupe de formule (3), (4) ou (5);
R₁ et R₂ sont un atome d'hydrogène,
R₃, R₄, R₅ et R₆ représentent indépendamment les uns des autres un atome d'hydrogène, un groupe alkyle en C₁ à C₄, alcoxy en C₁ à C₄ ou un atome d'halogène,
R₇ représente un atome d'hydrogène, un groupe amino ou phénylamino,
R₉ représente un groupe phényle non substitué ou substitué par un groupe alkyle en C₁ à C₄, alcoxy en C₁ à C₄ ou un atome d'halogène,
R₁₀ représente un atome d'hydrogène et
R₁₁ est un groupe sulfo.

10. Colorant azoïque selon l'une des revendications 1 à 9, dans lequel
A₁ et B₁ représentent indépendamment l'un de l'autre un groupe de formule 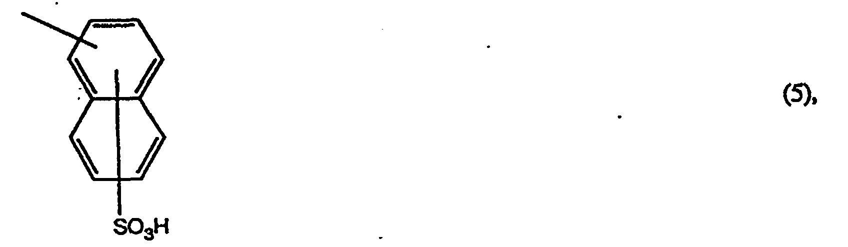 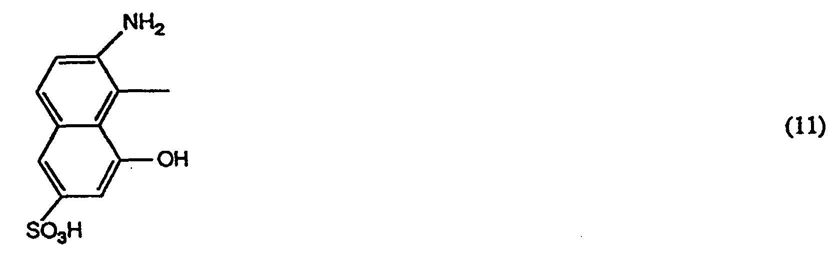 ou 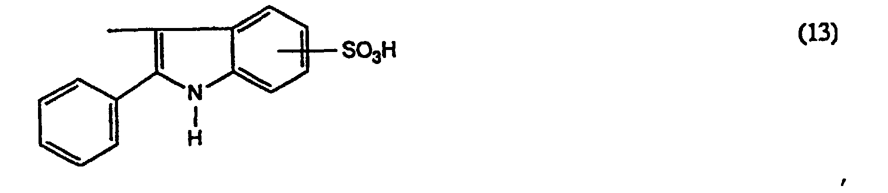 dans laquelle A₁ au sens de groupe de formule (5) ne représente pas le 6-sulfonapht-2-yle.

11. Colorant azoïque selon la revendication 10, dans lequel
A₁ et B₁ représentent indépendamment l'un de l'autre un groupe de formule (5) ou (11).

12. Colorant azoïque selon une des revendications 1 à 11, dans lequel
A₁ et B₁ ont des significations identiques.

13. Colorant azoïque selon la revendication 1 de formule 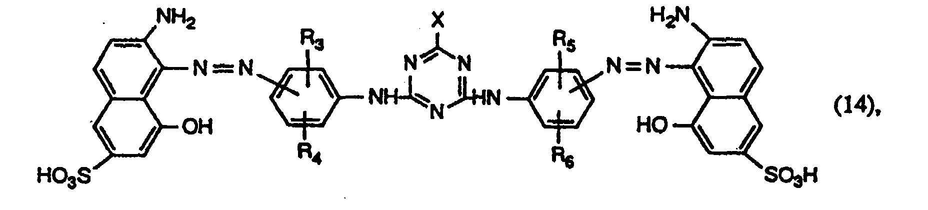 dans laquelle R₃, R₄, R₅ et R₆ représentent indépendamment les uns des autres un atome d'hydrogène, un groupe alkyle en C₁ à C₄, alcoxy en C₁ à C₄ ou un atome d'halogène.

14. Procédé pour la préparation de colorants azoïques selon la revendication 1, caractérisé en ce que, l'on condense le chlorure de cyanuryle ou le fluorure de cyanuryle avec les amines des formules 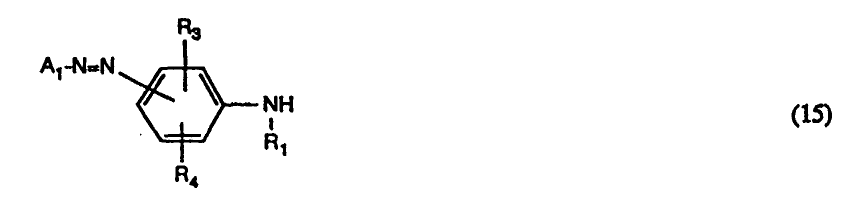 et 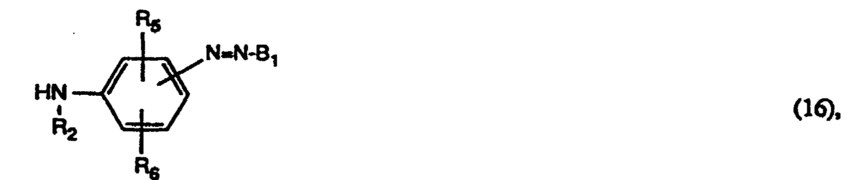 dans lesquelles R₁, R₂, R₃, R₄, R₅, R₆, A₁ et B₁ ont les significations indiquée à la revendication 1.

15. Utilisation des colorants azoïques selon l'une des revendications 1 à 13 ou des colorants azoïques obtenus selon la revendication 14 pour la teinture ou l'impression de matériau en fibres hydroxylé ou azoté ou de papier ou de cuir.

16. Utilisation selon la revendication 15 pour la teinture ou l'impression de matériau en fibres de polyamide naturel ou synthétique, en particulier de laine.
